# EUROPÄISCHE PATENTSCHRIFT

(11) **EP 3 100 612 B1**
(45) Veröffentlichungstag und Bekanntmachung des Hinweises auf die Patenterteilung: **21.03.2018**
(21) Anmeldenummer: 15170756.9
(22) Anmeldetag: 05.06.2015
(51) Int. Cl.: B66F 9/14, A21B 3/07, A47B 88/457, A47B 88/447

(54) **AUSZIEHBARE SCHIENE**
EXPANDABLE RAIL
GUIDE TÉLESCOPIQUE

(43) Veröffentlichungstag der Anmeldung: 07.12.2016
(73) Patentinhaber: Giger, Ulrich, 8608 Bubikon (CH); Bäbler, Florian, 8753 Mollis (CH); Bäbler, Kasper, 8753 Mollis (CH)
(72) Erfinder: Giger, Ulrich, 8608 Bubikon (CH); Bäbler, Florian, 8753 Mollis (CH); Bäbler, Kasper, 8753 Mollis (CH)
(74) Vertreter: Herrmann, Johanna

(56) Entgegenhaltungen:
- DE-A1- 1 781 068
- DE-A1- 4 019 124
- DE-A1- 19 623 022
- DE-A1-102012 003 799
- DE-A1-102013 100 298
- DE-U1-202008 014 112
- DE-U1-202009 004 801
- US-A- 5 207 555

## Beschreibung

Gegenstand der Erfindung ist eine ausziehbare Schiene zur Positionierung einer Last, beispielsweise eines Gestells zur Aufnahme von Waren, die in diesem Gestell gelagert sind. Eine derartige ausziehbare Schiene kann insbesondere in einer Positioniervorrichtung für eine Last Verwendung finden. Daher ist auch eine Positioniervorrichtung mit einer ausziehbaren Schiene Gegenstand der Erfindung. Eine derartige Vorrichtung ist aus DE 401 9124 A1 bekannt. Insbesondere handelt es sich bei dem Gestell um einen Stikkenwagen zur Aufnahme von Backgut. Das Gestell kann mittels der Positioniervorrichtung, welche die ausziehbare Schiene enthält, einer Verarbeitungsvorrichtung zugeführt werden und nach Abschluss des Verarbeitungsvorgangs der Verarbeitungsvorrichtung wieder entnommen werden. Bei der Verarbeitungsvorrichtung kann es sich beispielsweise um einen Backofen oder eine Kühlvorrichtung handeln. Insbesondere können auf dem Gestell gelagerte Backwaren in einer Vakuumkammer positioniert werden und der Vakuumkammer nach Abschluss des Vakuumkühlverfahrens wieder entnommen werden.
Bisher war es üblich, derartige auf Rollen gelagerte Gestelle manuell in die Verarbeitungsvorrichtung einzuschieben und nach Abschluss des entsprechenden Verarbeitungsschritts dieser Verarbeitungsvorrichtung wieder zu entnehmen.
Die manuelle Handhabung der Gestelle ist insbesondere dann aufwändig, wenn die Gestelle über eine Rampe in die Verarbeitungsvorrichtung eingeschoben werden müssen und der Verarbeitungsvorrichtung über diese Rampe wieder entnommen werden müssen.
Aufgabe der Erfindung ist es daher, eine Vorrichtung zu schaffen, mittels welcher eine Last, beispielsweise ein Gestell, in einer Verarbeitungsvorrichtung exakt positioniert werden kann und der Verarbeitungsvorrichtung wieder entnommen werden kann.
Die Lösung der Aufgabe der Erfindung erfolgt durch die Merkmale des Anspruchs 1. Weitere vorteilhafte Ausführungen der erfindungsgemässen ausziehbaren Schiene sind Gegenstand der abhängigen Ansprüche.

Eine ausziehbare Schiene umfasst ein erstes Schienenelement sowie ein zweites Schienenelement. Das erste Schienenelement ist relativ zum zweiten Schienenelement verschiebbar. Das erste Schienenelement weist einen Antriebsriemen auf, welcher an einem ersten Ende des ersten Schienenelements und an einem zweiten Ende des ersten Schienenelements befestigt ist, sodass sich der Antriebsriemen in Längsrichtung des ersten Schienenelements vom ersten Ende bis zum zweiten Ende erstreckt. Der Antriebsriemen wird über eine ortsfeste Antriebsvorrichtung geführt. Eine erste Umlenkrolle und eine zweite Umlenkrolle sind vorgesehen, sodass der Antriebsriemen von einer Längsrichtung in eine Querrichtung umlenkbar ist. Der Antriebsriemen erstreckt sich vom ersten Ende bis zur ersten Umlenkrolle in Längsrichtung des ersten Schienenelements sowie vom zweiten Ende zur zweiten Umlenkrolle ebenfalls in Längsrichtung des ersten Schienenelements. Der Antriebsriemen erstreckt sich von der ersten Umlenkrolle zur Antriebsvorrichtung in der Querrichtung, sowie von der zweiten Umlenkrolle zur Antriebsvorrichtung in der Querrichtung. Eine hintere Umlenkrolle ist in der Nähe eines ersten Endes des ersten Schienenelements befestigt. Eine vordere Umlenkrolle ist in der Nähe eines zweiten Endes des ersten Schienenelements am ersten Schienenelement befestigt. Ein erster Riemen ist über die hintere Umlenkrolle und über die vordere Umlenkrolle geführt. Die vordere Umlenkrolle dient zum Antrieb eines zweiten Riemens, welcher mit dem zweiten Schienenelement verbunden ist. Die vordere Umlenkrolle ist durch die Verschiebung des ersten Schienenelements durch den ersten Riemen in eine Drehbewegung versetzbar, wobei die vordere Umlenkrolle zum Antrieb eines zweiten Riemens dient, welcher mit dem zweiten Schienenelement verbunden ist.

Der erste Riemen kann ein erstes Riemenende und ein zweites Riemenende aufweisen. Das erste Riemenende und das zweite Riemenende können ortsfest an einem Befestigungselement befestigt sein.

Die vordere Umlenkrolle kann nach einem Ausführungsbeispiel ein erstes Rollenelement und ein zweites Rollenelement aufweisen, wobei das erste Rollenelement zur Aufnahme des ersten Riemens dient und das zweite Rollenelement zur Aufnahme des zweiten Riemens dient, sodass bei Verschiebung des ersten Schienenelements durch Betätigung der Antriebsvorrichtung die vordere Umlenkrolle durch den ersten Riemen mittels des ersten Rollenelements in eine Rotationsbewegung versetzbar ist, sowie das zweite Schienenelement durch den zweiten Riemen über das zweite Rollenelement der vorderen Umlenkrolle in Bewegung versetzbar ist.

Nach einem Ausführungsbeispiel kann der Antriebsriemen ein erstes Riemenende aufweisen, welches an oder nahe dem ersten Ende des ersten Schienenelements angeordnet ist. Insbesondere kann ein Befestigungsmittel zur Befestigung des ersten Riemenendes an oder nahe dem ersten Ende des ersten Schienenelements vorgesehen sein. Das Befestigungsmittel kann beispielsweise als eine Befestigungsplatte ausgebildet sein.

Nach einem Ausführungsbeispiel kann der Antriebsriemen ein zweites Riemenende aufweisen, welches an oder nahe dem zweiten Ende des ersten Schienenelements angeordnet ist. Insbesondere kann ein Befestigungsmittel zur Befestigung des zweiten Riemenendes an oder nahe dem zweiten Ende des ersten Schienenelements vorgesehen sein. Das Befestigungsmittel kann beispielsweise als eine Befestigungsplatte ausgebildet sein.

Mit nahe soll in den vorgehend beschriebenen Ausführungsbeispielen ein Abstand gemeint sein, der im Bereich von maximal 25% der Länge des Schienenelements liegt.

Nach einem Ausführungsbeispiel sind das erste Rollenelement und das zweite Rollenelement derart mit der Umlenkrolle verbunden, dass bei Bewegung des ersten Rollenelements das zweite Rollenelement mitbewegbar ist. Insbesondere sind das erste Rollenelement und das zweite Rollenelement derart mit der Umlenkrolle verbunden, dass bei Bewegung des ersten Rollenelements das zweite Rollenelement mitdreht. Das heisst, das erste Rollenelement und das zweite Rollenelement sind gegeneinander drehfest angeordnet. Beispielsweise können das erste Rollenelement und das zweite Rollenelement auf gemeinsamen Drehachse angeordnet sein, wobei beispielsweise ein Achselement vorgesehen ist, welche das erste Rollenelement und das zweite Rollenelement starr verbindet. Die Umlenkrolle ist drehbar auf dem ersten Schienenelement gelagert.

Nach einem Ausführungsbeispiel unterscheidet sich der Durchmesser des ersten Rollenelements vom Durchmesser des zweiten Rollenelements. Insbesondere kann das erste Rollenelement den halben Durchmesser des zweiten Rollenelements aufweisen, sodass das zweite Schienenelement um die doppelte Weglänge in Bezug auf das erste Schienenelement verschoben werden kann. Wird das erste Schienenelement somit um die Weglänge x in Längsrichtung verschoben, erfolgt durch die Betätigung der vorderen Umlenkrolle 9 gleichzeitig eine Verschiebung des zweiten Schienenelements um die Weglänge 2*x, das heisst um die doppelte Weglänge.

Wenn also der Durchmesser des zweiten Rollenelements das n-fache des Durchmessers des ersten Rollenelements beträgt, wird das zweite Schienenelement um die n-fache Weglänge des ersten Schienenelements verschoben.

Nach einem Ausführungsbeispiel weist der zweite Riemen ein erstes Riemenende auf, welches an einem ersten Ende des zweiten Schienenelements befestigt ist, sowie ein zweites Riemenende, welches an einem zweiten Ende des zweiten Schienenelements befestigt ist.

Insbesondere kann zwischen dem ersten Riemenende und dem zweiten Rollenelement eine Umlenkrolle und zwischen dem zweiten Riemenende und dem zweiten Rollenelement eine Umlenkrolle angeordnet sein, sodass der zweite Riemen über die Umlenkrollen zum zweiten Rollenelement führbar ist. Die zusätzlichen Umlenkrollen sind ortsfest auf dem ersten Schienenelement gelagert und um ihre Drehachsen drehbar. Sie dienen der besseren Führung des zweiten Riemens auf dem zweiten Rollenelement.

Insbesondere kann zwischen der hinteren Umlenkrolle und der vorderen Umlenkrolle eine Führungsrolle für den ersten Riemen vorgesehen sein. Die Führungsrolle ist insbesondere auf dem ersten Schienenelement angeordnet.

Insbesondere können die erste Umlenkrolle und die zweite Umlenkrolle ortsfest angeordnet sein. Das heisst, das erste Schienenelement kann sich in Bezug auf die erste und zweite Umlenkrolle um eine Weglänge x verschieben.

Nach einem Ausführungsbeispiel kann ein ortsfestes Schienenelement vorgesehen sein, welches die erste Umlenkrolle und die zweite Umlenkrolle trägt.

Die erfindungsgemässe ausziehbare Schiene hat den Vorteil, dass mittels einer einzigen Antriebsvorrichtung zwei oder mehr Schienenelemente gleichzeitig verschiebbar sind. Des Weiteren kann das zweite Schienenelement um ein Mehrfaches des Verschiebewegs des ersten Schienenelements verschoben werden.

Die Erfindung umfasst ferner eine Positioniervorrichtung umfassend eine ausziehbare Schiene nach einem der vorhergehenden Ausführungsbeispiele. Insbesondere kann die ausziehbare Schiene mittels eines Vertikalantriebs zwischen einer Warteposition und einer Verschiebeposition verschiebbar sein. Die Verwendung einer Positioniervorrichtung weist den zusätzlichen Vorteil auf, dass Niveauunterschiede ausgeglichen werden können. Das heisst, mittels der Positioniervorrichtung kann ein Gestell über einen Absatz oder über eine Rampe gehoben werden. Insbesondere kann auf eine keilförmige Rampe zum manuellen Einschieben des Gestells in die Verarbeitungsvorrichtung sowie zu dessen Entnahme verzichtet werden. Der Platz, der von einer derartigen keilförmigen Rampe eingenommen worden ist, wird nunmehr von der Positioniervorrichtung eingenommen, sodass kein zusätzlicher Platzbedarf entsteht, wenn eine Positioniervorrichtung eingesetzt wird.

Eine Last kann über eine Rampe in eine Verarbeitungsvorrichtung gehoben werden, um im Anschluss in der Verarbeitungsvorrichtung platziert zu werden. Nach einem Ausführungsbeispiel ist die ausziehbare Schiene mittels einer Steuerungseinheit betätigbar. Das heisst, die ausziehbare Schiene kann auf Knopfdruck oder durch ein Prozessleitsystem angehoben oder abgesenkt werden, bzw. in die Verschiebeposition ausgefahren oder wieder in die Warteposition eingefahren werden.

Ein Verfahren zur Positionierung einer Last, insbesondere eines Gestells, in einer Verarbeitungsvorrichtung mittels einer ausziehbaren Schiene nach einem der vorhergehenden Ausführungsbeispiele umfasst folgende Schritte: in einem ersten Schritt wird die Last auf dem zweiten Schienenelement positioniert, in einem zweiten Schritt wird die Last angehoben, in einem dritten Schritt wird die ausziehbare Schiene derart betätigt, dass das erste und/oder das zweite Schienenelement die Last von einer Ladeposition in eine Zielposition bewegen. In einem vierten Schritt wird die Last an der Zielposition positioniert, in einem fünften Schritt wird die ausziehbare Schiene abgesenkt, in einem sechsten Schritt bewegen sich das erste und/oder zweite Schienenelement von der Zielposition in die Ladeposition zurück. Unter Ladeposition wird hierbei die Position verstanden, in welcher die Last aufgeladen oder abgeladen werden kann. Das heisst, in der Ladeposition kann ein Beladevorgang oder ein Entladevorgang stattfinden.

Insbesondere kann nach Abschluss eines Verarbeitungsschritts die Last wieder aus der Verarbeitungsvorrichtung entnommen werden. Zur Entnahme der Last können die nachfolgenden Verfahrensschritte ausgeführt werden: die ausziehbare Schiene wird derart betätigt, dass das erste und/oder das zweite Schienenelement von der Ladeposition in die Zielposition bewegt wird, sodann das zweite Schienenelement die Last an der Zielposition aufnimmt. Anschliessend wird die ausziehbare Schiene mit der Last angehoben, danach bewegen sich das erste und/oder zweite Schienenelement in die Ladeposition zurück. Zum Abschluss wird die ausziehbare Schiene in der Ladeposition samt der Last abgesenkt, sodass die Last abgestellt und entnommen werden kann. Derartige Lasten können Gestelle sein, die üblicherweise auf Fahrelementen, beispielsweise Rollen gelagert sind, sodass sie manuell von einem Verarbeitungsprozess zum nachfolgenden Verarbeitungsprozess geschoben werden können.

Insbesondere kann die Verarbeitungsvorrichtung eine Vakuumkühlvorrichtung für Backwaren umfassen.

Nachfolgend wird die erfindungsgemässe ausziehbare Schiene anhand eines Ausführungsbeispiels dargestellt. Es zeigen
Fig. 1 eine schematische Ansicht der ausziehbaren Schiene nach einem ersten Ausführungsbeispiel von oben,
Fig. 2 ein Detail eines ortsfesten Schienenelements,
Fig. 3 eine Ansicht einer ausziehbaren Schiene nach einem zweiten Ausführungsbeispiel,
Fig. 4 eine Ansicht der ausziehbaren Schiene gemäss Fig. 3 von der Antriebsseite (Aussenseite),
Fig. 5 ein erstes Detail der Umlenkrolle 9 sowie des ersten und zweiten Schienenelements gemäss des Ausführungsbeispiels nach Fig. 3,
Fig. 6 ein zweites Detail der Umlenkrolle 9 sowie des ersten und zweiten Schienenelements gemäss des Ausführungsbeispiels nach Fig. 3,
Fig. 7 die Anordnung der Riemen sowie das zweite Schienenelement des zweiten Ausführungsbeispiels,
Fig. 8 ein Detail der Anordnung der Umlenkrollen 5, 6 im Befestigungselement 7,
Fig. 9 eine Ansicht einer ausziehbaren Schiene nach einem dritten Ausführungsbeispiel,
Fig. 10 einen Schnitt durch das erste, zweite und dritte Schienenelement des Ausführungsbeispiels aus Fig. 9,
Fig. 11 ein Detail des Antriebselements von Fig. 9,
Fig. 12 ein Detail der Umlenkrollen zum Antrieb der Schienenelemente,
Fig. 13 die Ansicht von Fig. 9 mit dem zweiten Schienenelement,
Fig. 14 eine Ansicht der Antriebsseite des Ausführungsbeispiels gemäss Fig. 9,
Fig. 15 eine erste Ansicht eines Ausführungsbeispiels einer Positioniervorrichtung mit einer ausziehbaren Schiene,
Fig. 16 eine zweite Ansicht eines Ausführungsbeispiels einer Positioniervorrichtung mit einer ausziehbaren Schiene gemäss Fig. 15,
Fig. 17 eine dritte Ansicht eines Ausführungsbeispiels einer Positioniervorrichtung mit einer ausziehbaren Schiene gemäss Fig. 15 im ausgezogenen Zustand,
Fig. 18 eine vierte Ansicht eines Ausführungsbeispiels einer Positioniervorrichtung mit einer ausziehbaren Schiene gemäss Fig. 15 im ausgezogenen Zustand.

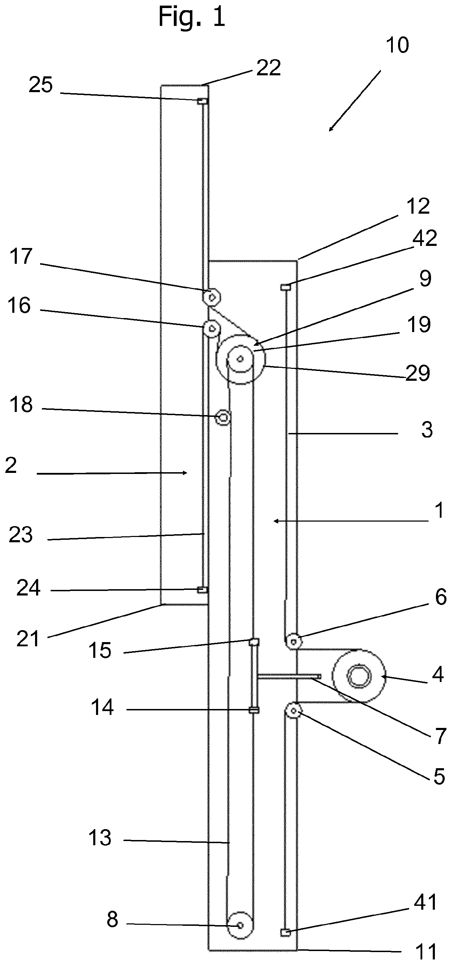

Fig. 1 zeigt eine Ansicht einer ausziehbaren Schiene 10 nach einem ersten Ausführungsbeispiel. Die ausziehbare Schiene gemäss Fig. 1 umfasst ein erstes Schienenelement 1 sowie ein zweites Schienenelement 2. Das erste Schienenelement 1 ist relativ zum zweiten Schienenelement 2 verschiebbar. Das erste Schienenelement 1 weist einen Antriebsriemen 3 auf, welcher mittels eines ersten Befestigungselements 41 an oder nahe einem ersten Ende 11 des ersten Schienenelements 1 und mittels eines zweiten Befestigungselements 42 an oder nahe einem zweiten Ende 12 des ersten Schienenelements 1 befestigt ist, sodass sich der Antriebsriemen 3 in Längsrichtung des ersten Schienenelements 1 vom ersten Befestigungsmittel 41 bis zum zweiten Befestigungsmittel 42 erstreckt. Unter nahe soll dabei ein Abstand gemeint sein, der im Bereich maximal 25% der Länge des Schienenelements liegt.

Der Antriebsriemen 3 wird über eine ortsfeste Antriebsvorrichtung 4 geführt. Eine erste Umlenkrolle 5 und eine zweite Umlenkrolle 6 sind vorgesehen, sodass der Antriebsriemen 3 von der Längsrichtung in eine Querrichtung umlenkbar ist. Der Antriebsriemen 3 erstreckt sich vom ersten Ende 11 bis zur ersten Umlenkrolle 5 in Längsrichtung des ersten Schienenelements 1 und vom zweiten Ende 12 zur zweiten Umlenkrolle 6 in Längsrichtung. Der Antriebsriemen 3 erstreckt sich von der ersten Umlenkrolle 5 zur Antriebsvorrichtung 4 in Querrichtung und von der zweiten Umlenkrolle 6 zur Antriebsvorrichtung 4 in Querrichtung.

Ein erster Riemen 13 ist über eine hintere Umlenkrolle 8 in der Nähe des ersten Endes 11 des ersten Schienenelements 1 und über eine vordere Umlenkrolle 9 in der Nähe des zweiten Endes 12 des ersten Schienenelements 1 geführt. Die vordere Umlenkrolle 9 dient zum Antrieb eines zweiten Riemens 23, welcher mit dem zweiten Schienenelement 2 verbunden ist. Der erste Riemen 13 weist ein erstes Riemenende 14 und ein zweites Riemenende 15 auf, wobei das erste Riemenende 14 und das zweite Riemenende 15 ortsfest an einem Befestigungselement 7 befestigt sind. Die vordere Umlenkrolle 9 weist ein erstes Rollenelement 19 und ein zweites Rollenelement 29 auf, wobei das erste Rollenelement 19 zur Aufnahme des ersten Riemens 13 dient und das zweite Rollenelement 29 zur Aufnahme des zweiten Riemens 23 dient, sodass bei Verschiebung des ersten Schienenelements 1 durch Betätigung der Antriebsvorrichtung 4 die vordere Umlenkrolle 9 durch den ersten Riemen 13 mittels des ersten Rollenelements 19 in eine Rotationsbewegung versetzbar ist, sowie das zweite Schienenelement 2 durch den zweiten Riemen 23 über das zweite Rollenelement 29 der vorderen Umlenkrolle 9 in Bewegung versetzbar ist. Bei der Bewegung der ersten und zweiten Schienenelemente handelt es sich insbesondere um eine Translationsbewegung.

Das erste Rollenelement 19 und das zweite Rollenelement 29 sind derart mit der Umlenkrolle 9 verbunden, dass bei Bewegung des ersten Rollenelements 19 das zweite Rollenelement 29 mitdreht. Der Durchmesser des ersten Rollenelements 19 kann sich vom Durchmesser des zweiten Rollenelements 29 unterscheiden. Gemäss des vorliegenden Ausführungsbeispiels weist das erste Rollenelement den halben Durchmesser des zweiten Rollenelements auf, sodass das zweite Schienenelement um die doppelte Weglänge in Bezug auf das erste Schienenelement verschoben werden kann. Wird das erste Schienenelement somit um die Weglänge x in Längsrichtung verschoben, erfolgt durch die Betätigung der vorderen Umlenkrolle 9 gleichzeitig eine Verschiebung des zweiten Schienenelements um die Weglänge 2*x, das heisst um die doppelte Weglänge.

Der zweite Riemen 23 weist ein erstes Riemenende 24 auf, welches an einem ersten Ende 21 des zweiten Schienenelements 2 befestigt ist und der zweite Riemen 23 weist ein zweites Riemenende 25 auf, welches an einem zweiten Ende 22 des zweiten Schienenelements 2 befestigt ist.

Zwischen dem ersten Riemenende 24 und dem zweiten Rollenelement 29 ist eine Umlenkrolle 16 und zwischen dem zweiten Riemenende 25 und dem zweiten Rollenelement 29 eine Umlenkrolle 17 angeordnet, sodass der zweite Riemen 23 über die Umlenkrollen 16, 17 zum zweiten Rollenelement 29 führbar ist. Die Umlenkrollen 16, 17 sind ortsfest auf dem ersten Schienenelement 1 gelagert und um ihre Drehachsen drehbar.

Zwischen der hinteren Umlenkrolle 8 und der vorderen Umlenkrolle 9 ist eine Führungsrolle 18 für den ersten Riemen 13 vorgesehen.

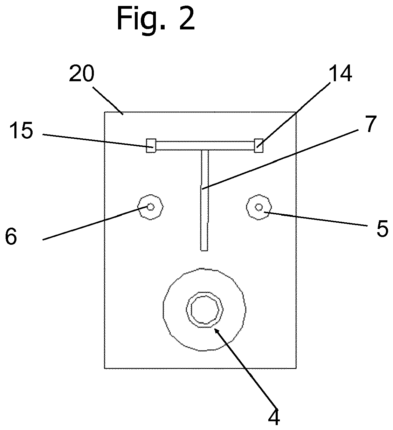

Die erste Umlenkrolle 5 und die zweite Umlenkrolle 6 sind ortsfest angeordnet. Ein ortsfestes Halteelement 20 kann gemäss Fig. 2 vorgesehen sein, welches die erste Umlenkrolle 5 und die zweite Umlenkrolle 6 trägt. An diesem ortsfesten Halteelement kann auch das Befestigungselement 7 angebracht sein und/oder die Antriebsvorrichtung 4. Das ortsfeste Halteelement liegt vor der Zeichnungsebene der Fig. 1, daher ist es in Fig. 1 nicht dargestellt. Das ortsfeste Halteelement kann ein Gleitelement enthalten, auf welchem das erste Schienenelement entlang seiner unteren Längskante gleiten kann.

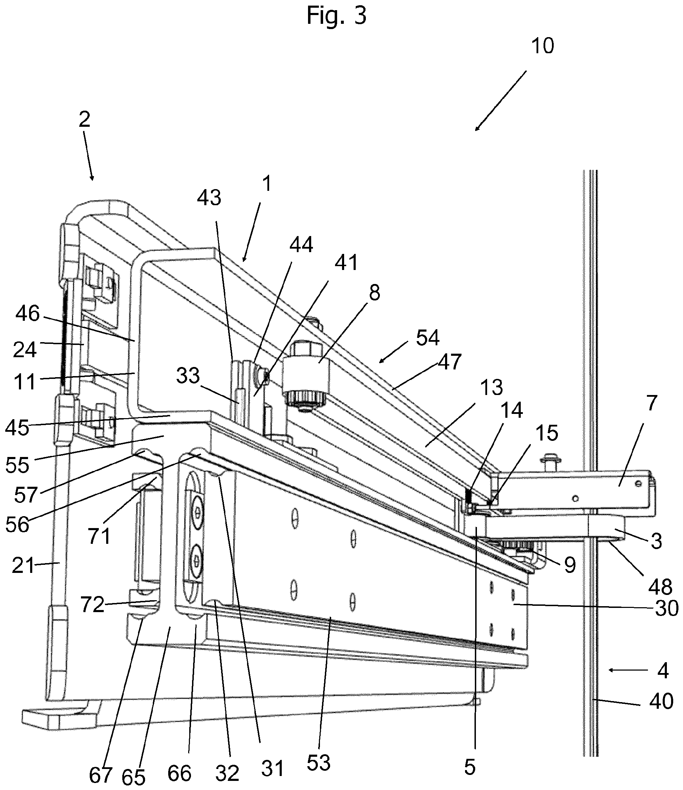

Fig. 3 zeigt eine Ansicht einer ausziehbaren Schiene 10 nach einem zweiten Ausführungsbeispiel. Gleichartige Elemente, deren Funktionsweise der Funktionsweise gemäss Fig. 1 oder Fig. 2 entspricht, tragen gleiche Bezugszeichen. Die ausziehbare Schiene gemäss Fig. 3 umfasst ein erstes Schienenelement 1 sowie ein zweites Schienenelement 2. Das erste Schienenelement 1 ist relativ zum zweiten Schienenelement 2 verschiebbar. Das erste Schienenelement 1 ebenfalls in Bezug auf ein ortsfestes Befestigungselement 30 verschiebbar. Das ortsfeste Befestigungselement 30 ist Teil eines Gehäuses, oder eines Rahmens, welcher nicht dargestellt ist. Das Befestigungselement 30 weist im vorliegenden Ausführungsbeispiel ein in der Zeichnung oben angeordnetes oberes Führungselement 31 sowie ein diesem gegenüberliegendes unteres Führungselement 32 auf. Jedes der oberen oder unteren Führungselemente 31, 32 kann eine Ausnehmung zur Aufnahme eines nicht dargestellten Gleitkörpers enthalten. Ein derartiger Gleitkörper kann beispielsweise eine Mehrzahl von Kugeln oder Rollen umfassen, die in der von zwei gegenüberliegenden Führungselementen gebildeten Ausnehmung gleiten können. Der Gleitkörper ist in der vorliegenden Darstellung der Einfachheit halber weggelassen.

Das erste Schienenelement 1 kann ein Gleitelement 53 sowie ein Tragelement 54 aufweisen. Gemäss der vorliegenden Darstellung ist das Gleitelement 53 unterhalb des Tragelements 54 angeordnet. Das Gleitelement 53 ist im vorliegenden Ausführungsbeispiel im Wesentlichen als ein Träger mit einem I-förmigen Profil ausgebildet. Am in der Zeichnung oberen Ende des I-förmigen Profils sind ein oberer Doppelschenkel 55 und ein unterer Doppelschenkel 65 angeordnet. Die Bezeichnung "oberer" und "unterer" bezieht sich hierbei ausdrücklich auf die Position in der Zeichnung. Es ist in gleicher Weise möglich, das Gleitelement um einen Winkel von 90° bezogen auf eine horizontale Längsachse anzuordnen, sodass der obere Doppelschenkel einen rechtsseitigen Doppelschenkel und der untere Doppelschenkel einen linksseitigen Doppelschenkel ausbildet. Das Tragelement 54 schliesst gemäss dieses Ausführungsbeispiels auf dem rechtsseitigen Doppelschenkel an. Das zweite Schienenelement 2 kommt auf dem ersten Schienenelement 1 zu liegen und bildet gemäss dieses Ausführungsbeispiels eine horizontale Unterlage für ein Gestell oder eine zu transportierende Ware, das heisst eine Last, aus.

Gemäss des vorliegenden Ausführungsbeispiels weisen sowohl der obere Doppelschenkel 55 als auch der untere Doppelschenkel 65 auf deren Innenseite je ein Führungselement auf. Der obere Doppelschenkel 55 weist ein erstes oberes Führungselement 56 und ein zweites oberes Führungselement 57 auf. Der untere Doppelschenkel 65 weist ein erstes unteres Führungselement 66 und ein zweites unteres Führungselement 67 auf. Das erste obere Führungselement 56 und das erste untere Führungselement liegen auf derselben Seite des Gleitelements und sind dem Befestigungselement 30 zugewendet. Das erste obere Führungselement 56 und das Führungselement 31 bilden die Auflage für einen Gleitkörper. Das erste untere Führungselement 66 und das Führungselement 32 bilden die Auflage für einen Gleitkörper. Das Gleitelement 53 kann daher entlang des Führungselements 31 sowie des Führungselements 32 gleiten, sodass das erste Schienenelement relativ zum Befestigungselement 30 verschiebbar ist.

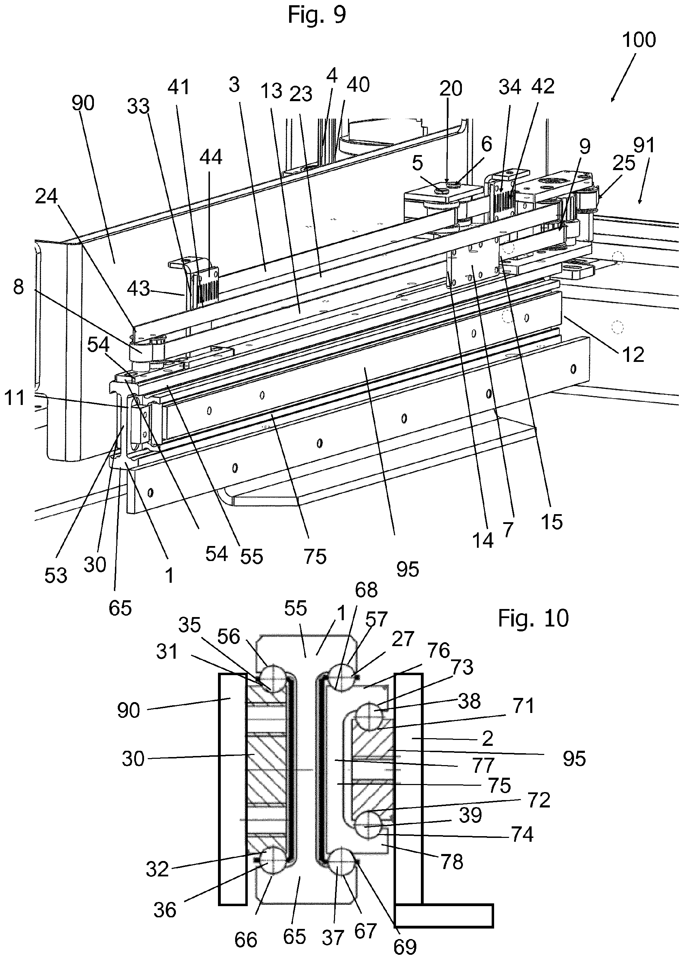

Das zweite obere Führungselement 57 und das Führungselement 71 bilden die Auflage für einen Gleitkörper. Das zweite untere Führungselement 67 und das Führungselement 72 bilden die Auflage für einen Gleitkörper. Die mit dem zweiten Schienenelement 2 verbundenen Führungselemente 71, 72 können daher entlang des zweiten oberen Führungselements 57 sowie des zweiten unteren Führungselements 67 gleiten, sodass das zweite Schienenelement 2 relativ zum ersten Schienenelement 1 verschiebbar ist. Wie in Fig. 9 dargestellt wird, kann auch in diesem Ausführungsbeispiel ein drittes Schienenelement zwischen dem ersten und zweiten Schienenelement angeordnet werden, sodass das zweite Schienenelement relativ zum dritten Schienenelement verschiebbar ist, das erste Schienenelement relativ zum dritten Schienenelement verschiebbar ist und das dritte Schienenelement relativ zum ersten oder zweiten Schienenelement verschiebbar ist.

Das Gleitelement 53 ist mit dem Tragelement 54 lösbar oder unlösbar verbunden, sodass bei einer Verschiebung des Gleitelements 53 das Tragelement 54 zusammen mit dem Gleitelement 53 verschoben wird. Das Tragelement 54 ist in dem vorliegenden Ausführungsbeispiel als C-Träger ausgestaltet. Andere Formen, beispielsweise ein L oder T-Träger wären ebenfalls denkbar. Das erste Schienenelement 1 weist einen Antriebsriemen 3 auf, welcher ein erstes Riemenende 33 aufweist, welches mittels eines ersten Befestigungsmittels 41 an oder nahe einem ersten Ende 11 des ersten Schienenelements 1 befestigt ist. Der Antriebsriemen weist ein zweites Riemenende 34 auf, welches mittels eines zweiten Befestigungsmittels 42 an oder nahe einem zweiten Ende 12 des ersten Schienenelements 1 befestigt ist, sodass sich der Antriebsriemen 3 in Längsrichtung des ersten Schienenelements vom ersten Befestigungsmittel 41 bis zum zweiten Befestigungsmittel 42 erstreckt. Unter "nahe" soll hierbei eine Position verstanden werden, die sich in der Nähe des Endes 11, 12 befindet, also dem entsprechenden Ende des Schienenelements näher ist, als der Mittenebene, welche die Halbierende der Länge des Schienenelements ausbildet. Insbesondere ist unter nahe ein Abstand gemeint, der im Bereich vom entsprechenden Ende bis zu ungefähr 25% der Länge des Schienenelements gemessen von ebendiesem Ende liegt.

Der Antriebsriemen 3 wird über eine ortsfeste Antriebsvorrichtung 4 geführt. Das zweite Ende 12 ist in Fig. 3 hinter der Antriebsvorrichtung 4 verborgen und daher nicht sichtbar. Gemäss dem vorliegenden Ausführungsbeispiel ist der Antriebsriemen 3 auf der Innenseite des Tragelements 54 befestigt. Das Befestigungselement 41 zur Befestigung des Antriebsriemens 3 weist zwei gegenüberliegende Plattenelemente 43, 44 auf, zwischen denen das Ende des Antriebsriemens 3 eingeklemmt werden kann. Eines dieser Plattenelemente bildet eine Grundplatte 43 aus. Diese Grundplatte ist L-förmig und mittels Schrauben auf der Innenseite des unteren Schenkels befestigt. Sie liegt vorzugsweise auf der Innenseite des unteren Schenkels 45 sowie auf dem Basiskörper 46 des Tragelements 54 auf und stützt sich auf der Innenwand des Basiskörpers 46 ab. Das der Grundplatte gegenüberliegende Plattenelement bildet eine Deckplatte 44 aus. Die Grundplatte 43 und Deckplatte 44 können mittels einer Schraubverbindung gesichert sein, sodass das erste Ende 33 des Antriebsriemens 3 zwischen Grundplatte und Deckplatte gehalten wird.

Eine erste Umlenkrolle 5 und eine zweite Umlenkrolle 6 sind vorgesehen, sodass der Antriebsriemen 3 von der Längsrichtung in eine Querrichtung umlenkbar ist. Der Antriebsriemen 3 erstreckt sich vom ersten Ende 11 bis zur ersten Umlenkrolle 5 in Längsrichtung des ersten Schienenelements 1 und vom zweiten Ende 12 zur zweiten Umlenkrolle 6 in Längsrichtung, wobei dieser Teil des Antriebsriemens in Fig. 3 durch die Antriebsvorrichtung 4 verdeckt ist. Der Antriebsriemen 3 erstreckt sich von der ersten Umlenkrolle 5 zur Antriebsvorrichtung 4 in Querrichtung und von der zweiten Umlenkrolle 6 zur Antriebsvorrichtung in Querrichtung. Die Antriebsvorrichtung 4 besteht gemäss dieses Ausführungsbeispiels aus einer Antriebsspindel 40, die von einer nicht dargestellten Antriebseinheit angetrieben werden kann. Auf der Antriebsspindel 40 ist eine Antriebsrolle 48 angeordnet, um welche der Antriebsriemen 3 verläuft. Die Antriebsrolle 48 treibt den Antriebsriemen 3 derart an, dass entweder die Länge des Antriebsriemens zwischen dem ersten Ende des Antriebsriemens und der Antriebsrolle verringert und entsprechend die Länge des Antriebsriemens zwischen dem zweiten Ende des Antriebsriemens und der Antriebsrolle vergrössert wird oder umkehrt, je nach der gewählten Drehrichtung der Antriebsrolle. Wenn also die Antriebsrolle 48 in der vorliegenden Darstellung im Gegenuhrzeigersinn bewegt wird, verkürzt sich der Abstand zwischen der Umlenkrolle 5 und dem ersten Riemenende 33. Das erste Schienenelement 1 wird somit in der Darstellung gemäss Fig. 3 in die Zeichenebene hinein verschoben.

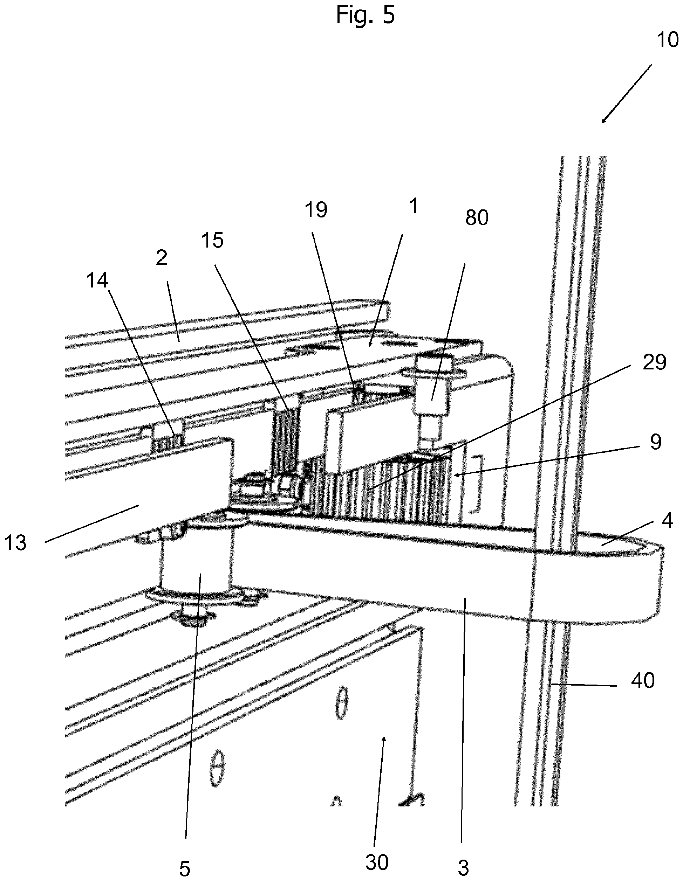

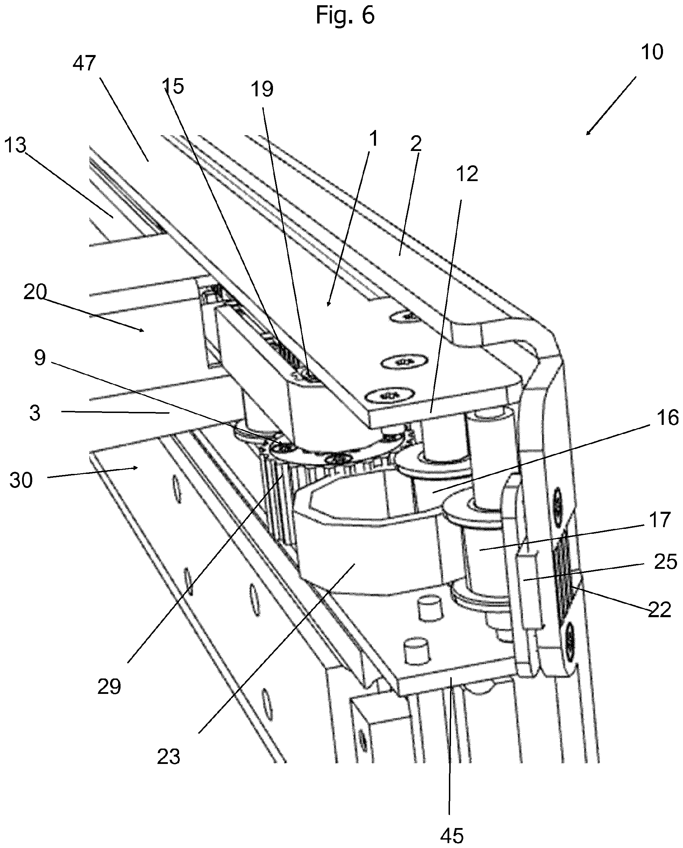

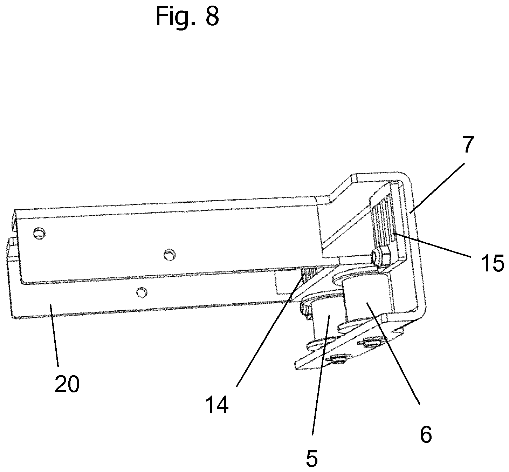

Ein erster Riemen 13 ist über eine hintere Umlenkrolle 8 in der Nähe des ersten Endes 11 des ersten Schienenelements 1 und über eine vordere Umlenkrolle 9 in der Nähe des zweiten Endes 12 des ersten Schienenelements 1 geführt. Die vordere Umlenkrolle 9 dient zum Antrieb eines zweiten Riemens 23, welcher mit dem zweiten Schienenelement 2 verbunden ist, was in Fig. 5 und Fig. 6 gezeigt ist. Der erste Riemen 13 weist ein erstes Riemenende 14 und ein zweites Riemenende 15 auf, wobei das erste Riemenende 14 und das zweite Riemenende 15 ortsfest an einem Befestigungselement 7 befestigt sind. Das Befestigungselement kann Bestandteil eines Halteelements 20 sein, was in Fig. 8 dargestellt ist.

Die vordere Umlenkrolle 9 weist ein erstes Rollenelement 19 und ein zweites Rollenelement 29 auf, wobei das erste Rollenelement 19 zur Aufnahme des ersten Riemens 13 dient und das zweite Rollenelement 29 zur Aufnahme des zweiten Riemens 23 dient, sodass bei Verschiebung des ersten Schienenelements 1 durch Betätigung der Antriebsvorrichtung 4 die vordere Umlenkrolle 9 durch den ersten Riemen 13 mittels des ersten Rollenelements 19 in eine Rotationsbewegung versetzbar ist, sowie das zweite Schienenelement 2 durch den zweiten Riemen 23 über das zweite Rollenelement 29 der vorderen Umlenkrolle 9 in Bewegung versetzbar ist.

Das erste Rollenelement 19 und das zweite Rollenelement 29 sind derart mit der Umlenkrolle 9 verbunden, dass bei Bewegung des ersten Rollenelements 19 das zweite Rollenelement 29 mitdreht. Der Durchmesser des ersten Rollenelements 19 kann sich vom Durchmesser des zweiten Rollenelements 29 unterscheiden. Gemäss des vorliegenden Ausführungsbeispiels weist das erste Rollenelement 19 den halben Durchmesser des zweiten Rollenelements 29 auf, sodass das zweite Schienenelement 2 um die doppelte Weglänge in Bezug auf das erste Schienenelement verschoben wird. Wird das erste Schienenelement 1 somit um die Weglänge x in Längsrichtung verschoben, erfolgt durch die Betätigung der vorderen Umlenkrolle 9 gleichzeitig eine Verschiebung des zweiten Schienenelements 2 um die Weglänge 2*x, das heisst um die doppelte Weglänge.

Der zweite Riemen 23 weist ein erstes Riemenende 24 auf, welches an einem ersten Ende 21 des zweiten Schienenelements 2 befestigt ist und der zweite Riemen 23 weist ein zweites Riemenende 25 auf, welches an einem zweiten Ende 22 des zweiten Schienenelements 2 befestigt ist.

Zwischen dem ersten Riemenende 24 und dem zweiten Rollenelement 29 kann wie in Fig. 1 gezeigt ist, eine Umlenkrolle 16 und zwischen dem zweiten Riemenende 25 und dem zweiten Rollenelement 29 eine Umlenkrolle 17 angeordnet sein, sodass der zweite Riemen 23 über die Umlenkrollen 16, 17 zum zweiten Rollenelement 29 führbar ist. Die Umlenkrollen 16, 17 sind ortsfest auf dem ersten Schienenelement 1 gelagert und um ihre Drehachsen drehbar. Gemäss den in Fig. 3,5,6 dargestellten Details dieses Ausführungsbeispiels wurde auf diese zusätzlichen Umlenkrollen verzichtet, da sie für die Erzeugung einer Verschiebebewegung nicht essentiell sind. Durch diese Umlenkrollen wird die Führung des zweiten Riemens 23 verbessert, sodass die Kraftübertragung vom Rollenelement 29 auf den zweiten Riemen 23 verbessert werden kann, sodass auch bei hoher Belastung eine präzise, ruckfreie Führung des zweiten Schienenelements gewährleistet ist.

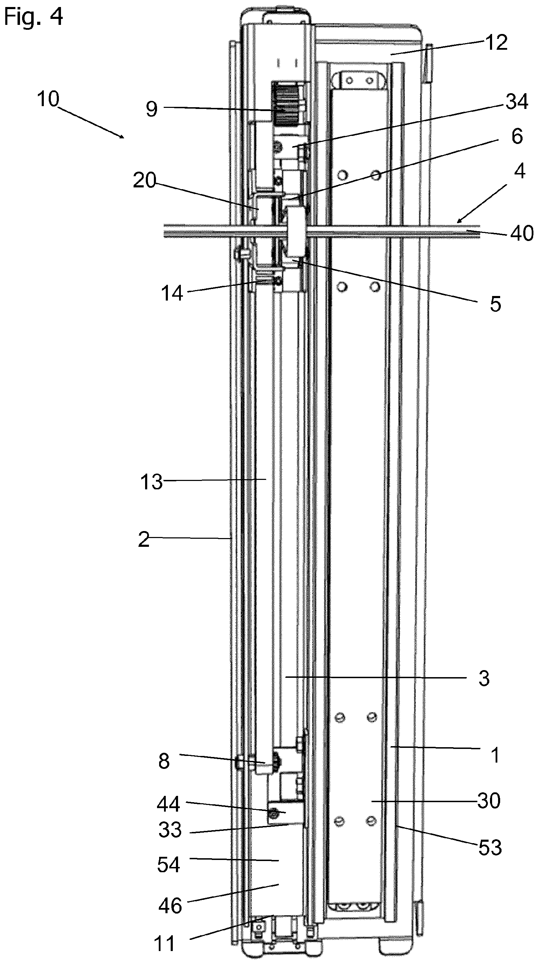

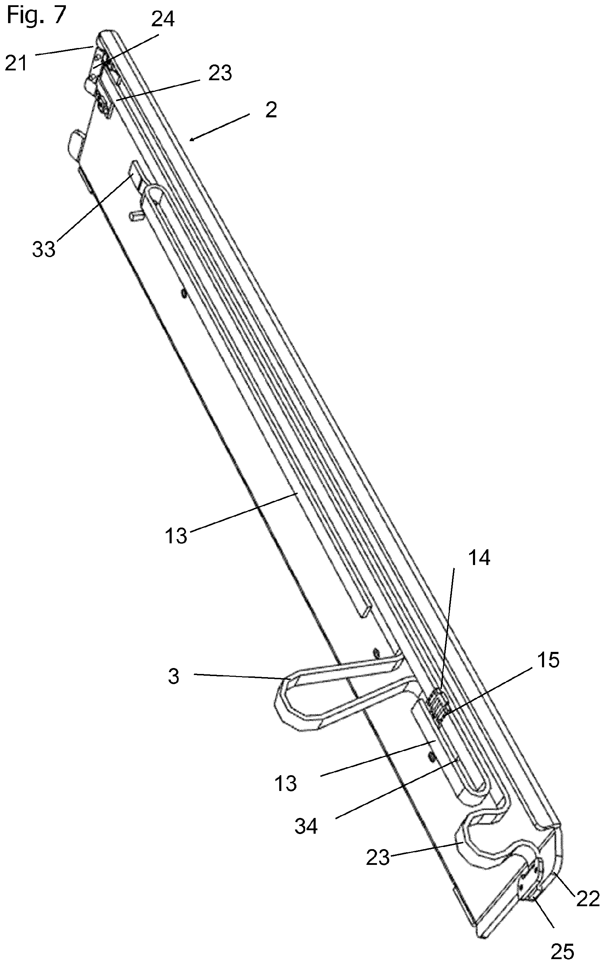

Fig. 4 zeigt eine Ansicht der ausziehbaren Schiene 10 gemäss Fig. 3 von der Antriebsseite, das heisst von der Aussenseite in Bezug auf den Warenfluss. Fig. 4 zeigt das Befestigungselement 30, das dahinter liegende erste Schienenelement 1 sowie das hinter dem ersten Schienenelement 1 liegende zweite Schienenelement 2. Insbesondere zeigt die Fig. 4 den Verlauf des Antriebsriemens 3 von seinem ersten Riemenende 33 bis zu seinem zweiten Riemenende 34. Der Antriebsriemen 3 ist am ersten Ende 33 am Tragelement 54 des ersten Schienenelements 1 mittels der Deckplatte 44 befestigt. Vom ersten Ende 33 erstreckt sich der Antriebsriemen 3 entlang der Innenwand des Basiskörpers 46 des Tragelements 54 bis zur ersten Umlenkrolle 5. Von der ersten Umlenkrolle 5 wird der Antriebsriemen 3 um die Antriebsvorrichtung 4 geführt. Die Antriebsvorrichtung 4 umfasst eine Antriebsrolle, die in der vorliegenden Darstellung nicht sichtbar ist und von der Antriebsspindel 40 angetrieben wird. Sodann wird der Antriebsriemen 3 zu der zweiten Umlenkrolle 6 geführt und verläuft im Anschluss entlang des Basiskörpers 46 bis zum zweiten Ende 34. Durch die von der Antriebsvorrichtung verursachte Drehbewegung der Antriebsrolle verändert sich der Abstand zwischen der Antriebsrolle und dem ersten bzw. zweiten Ende 33, 34 des Antriebsriemens 3. Da die Enden des Antriebsriemens 3 am ersten Schienenelement 1 befestigt sind, erfolgt eine Verschiebung des ersten Schienenelements. Auf dem ersten Schienenelement ist auch ein erster Riemen 13 befestigt. Dieser erste Riemen 13 wird ausgehend von seinem ersten Ende 14 um eine hintere Umlenkrolle 8 bis zu einer vorderen Umlenkrolle 9 geführt und dessen zweites Ende 15 wiederum auf dem ersten Schienenelement befestigt. In der Figur 7 ist der Verlauf des ersten Riemens 13 gezeigt. Wenn das erste Schienenelement 1 verschoben wird, treibt der erste Riemen 13 die Umlenkrolle 9 an, weil der erste Riemen 13 um das erste Rollenelement 19 der Umlenkrolle 9 geführt ist. Die Umlenkrolle 9 enthält eine gemeinsame Antriebswelle für das erste Rollenelement 19 und das zweite Rollenelement 29. D.h. bei Bewegung des ersten Rollenelements 19 wird das zweite Rollenelement 29 mitbewegt. Das zweite Rollenelement 29 treibt den zweiten Riemen 23 an, was in Figur 6 im Detail gezeigt ist.

Fig. 5 zeigt die vordere Umlenkrolle 9 im Detail sowie das erste und zweite Schienenelement gemäss des Ausführungsbeispiels nach Fig. 3. Das Halteelement 20 sowie das Befestigungselement 7 sind in der vorliegenden Darstellung weggelassen, um das erste Rollenelement 19 sowie das zweite Rollenelement 29 der Umlenkrolle 9 besser sichtbar zu machen. Es ist möglich, den ersten Riemen mittels einer Umlenkrolle 80 zusätzlich zu führen. Diese Umlenkrolle 80 kann ebenfalls im ersten Schienenelement 1 gehalten werden oder auch ortsfest in dem nicht dargestellten Halteelement 20 gehalten sein. Die Halterung der Umlenkrolle 80 ist aus Gründen der Übersicht in dieser Darstellung weggelassen. Der erste Riemen 13 wird somit um einen Winkel von 180° um das erste Rollenelement 19 herumgeführt. Das zweite Ende 15 des Riemens 13 ist am Befestigungselement 7 befestigt.

Fig. 6 zeigt ein zweites Detail der Umlenkrolle 9 sowie des ersten und zweiten Schienenelements gemäss des Ausführungsbeispiels nach Fig. 3. Die Ansicht in Fig. 6 zeigt die zweite Seite 22 des zweiten Schienenelements 2 sowie die zweite Seite 12 des ersten Schienenelements 1. Somit zeigt Fig. 6 den Teil der ausziehbaren Schiene 10, der in Figur 3 hinter dem Halteelement 20 verdeckt ist. Die Umlenkrolle 9 mit dem ersten Rollenelement 19 und dem zweiten Rollenelement 29 ist in dem Tragelement 54 des ersten Schienenelements 1 zwischen dessen oberen Schenkel 47 und dessen unteren Schenkel 45 drehbar befestigt. Der Übersichtlichkeit halber ist in dieser Darstellung der zweite Riemen 23 versetzt zum zweiten Rollenelement 29 angeordnet. Der zweite Riemen 23 umgreift das zweite Rollenelement 29 und wird von der Umlenkrolle 16 über das zweite Rollenelement 29 sowie anschliessend über die Umlenkrolle 17 geführt. Von der Umlenkrolle 16 ausgehend verläuft der zweite Riemen 23 zwischen der Aussenwand des Basiskörpers 46 des ersten Schienenelements 1 und dem zweiten Schienenelement 2 bis zu dessen ersten Ende 24, was in Figur 3 dargestellt ist. Von der Umlenkung 17 ausgehend verläuft der zweite Riemen 23 entlang der Wand des zweiten Schienenelements 2 bis zu dessen zweiten Ende 25. Am ersten Ende 24 und am zweiten Ende 25 ist der zweite Riemen 23 am zweiten Schienenelement 2 befestigt.

Fig. 7 zeigt die Anordnung der Riemen sowie das zweite Schienenelement 2 des zweiten Ausführungsbeispiels. Dieser erste Riemen 13 wird ausgehend von seinem ersten Ende 14 um eine hintere Umlenkrolle 8 bis zu einer vorderen Umlenkrolle 9 geführt und dessen zweites Ende 15 wiederum auf dem ersten Schienenelement 1 befestigt. Die Umlenkrollen sind in dieser Darstellung der Einfachheit halber weggelassen. Des Weiteren ist der vordere Teil des ersten Riemens 13 unterbrochen dargestellt. Diese Unterbrechung dient der Sichtbarmachung des darunter liegenden Antriebsriemens 13. D.h. ein Teil des ersten Riemens 13 ist in Figur 7 weggeschnitten. Die Figur 7 unterscheidet sich in der Anordnung gemäss Figur 4 auch dahingehend, dass das erste Ende 14 und das zweite Ende 15 mit einem einzigen Befestigungselement auf der Oberfläche des nicht dargestellten ersten Schienenelements gehalten sind. Zwischen dem ersten Schienenelement 1 und dem zweiten Schienenelement 2 verläuft ein zweiter Riemen 23. Der zweite Riemen 23 hat ein erstes Ende 24, welches am ersten Ende 21 des zweiten Schienenelements 2 befestigt ist. Von diesem ersten Ende 24 verläuft der zweite Riemen 23 bis zu der Umlenkrolle 16. Danach bildet der zweite Riemen eine Schlaufe aus, die um das zweite Rollenelement 29 der Umlenkrolle 9 geführt ist. Danach verläuft der zweite Riemen 23 um die Umlenkrolle 17 zu seinem zweiten Ende 25, welches am zweiten Ende 22 des zweiten Schienenelements 2 befestigt ist. Sämtliche Umlenkrollen sind in der vorliegenden Darstellung der Einfachheit halber weggelassen. Zur Lage der Umlenkrollen wird insbesondere auf die Figuren 4, 5 und 6 verwiesen.

Fig. 8 zeigt ein Detail der Anordnung der Umlenkrollen 5, 6 im Befestigungselement 7. Das Befestigungselement 7 ist Teil eines ortsfesten Halteelements 20. An diesem Befestigungselement 7 ist das erste Ende 14 des ersten Riemens 13 sowie das zweite Ende 15 des ersten Riemen 13 befestigt. Das erste Schienenelement 1 ist somit relativ zum Halteelement 20 belegbar. Des Weiteren sind die Umlenkrollen 5,6 für den Antriebsriemen 3 gezeigt. Diese Umlenkrollen 5, 6 sind um ihre Drehachse drehbar.

Fig. 9 zeigt eine Ansicht einer ausziehbaren Schiene 100 nach einem dritten Ausführungsbeispiel, wobei Fig. 9 im Unterschied zur Fig. 3 die ausziehbare Schiene auf ihrer Ladeseite zeigt, welche der in Fig. 3 gezeigten Antriebsseite gegenüber liegt.

Gleichartige Elemente, deren Funktionsweise der Funktionsweise der Elemente gemäss Fig. 1 bis Fig. 8 entspricht, tragen gleiche Bezugszeichen. Die ausziehbare Schiene gemäss Fig. 9 umfasst ein erstes Schienenelement 1 sowie ein zweites Schienenelement 2. Das erste Schienenelement 1 ist relativ zum zweiten Schienenelement 2 verschiebbar. Das erste Schienenelement 1 ist ebenfalls in Bezug auf ein ortsfestes Befestigungselement 30 verschiebbar. Das ortsfeste Befestigungselement 30 ist Teil eines Rahmenelements 90, beispielsweise eines Gehäuses oder eines Rahmens. Das Befestigungselement 30 weist im vorliegenden Ausführungsbeispiel wie in Fig. 3 ein oberes Führungselement sowie ein diesem gegenüberliegendes unteres Führungselement auf. Jedes der oberen oder unteren Führungselemente kann eine Ausnehmung zur Aufnahme eines nicht dargestellten Gleitkörpers enthalten. Ein derartiger Gleitkörper kann beispielsweise eine Mehrzahl von Kugeln oder Rollen umfassen, die in der von zwei gegenüberliegenden Führungselementen gebildeten Ausnehmung gleiten können. Der Gleitkörper ist in der vorliegenden Darstellung der Einfachheit halber weggelassen. Das erste Schienenelement 1 kann ein Gleitelement 53 sowie ein Tragelement 54 aufweisen. Gemäss der vorliegenden Darstellung ist das Gleitelement 53 unterhalb des Tragelements 54 angeordnet. Das Gleitelement 53 ist im vorliegenden Ausführungsbeispiel im Wesentlichen als ein Träger mit einem I-förmigen Profil ausgebildet. Am in der Zeichnung oberen Ende des I-förmigen Profils sind ein oberer Doppelschenkel 55 und ein unterer Doppelschenkel 65 angeordnet. Die Bezeichnung "oberer" und "unterer" bezieht sich hierbei ausdrücklich auf die Position in der Zeichnung. Es ist in gleicher Weise möglich, das Gleitelement um einen Winkel von 90° gedreht anzuordnen, sodass der obere Doppelschenkel einen rechtsseitigen Doppelschenkel und der untere Doppelschenkel einen linksseitigen Doppelschenkel ausbildet. Das Tragelement 54 schliesst gemäss dieses Ausführungsbeispiels auf dem oberen Doppelschenkel 55 an. Das zweite Schienenelement 2 ist zwischen dem oberen Doppelschenkel 55 und dem unteren Doppelschenkel 65 auf der Seite des Gleitelements angeordnet, welche dem Befestigungselement 30 gegenüber gelegen ist. Vom zweiten Schienenelement 2 ist in Fig. 9 nur ein Verschiebeelement 95 gezeigt. Das Verschiebeelement 95 kann mittels Rollenelementen relativ zum Schienenelement 1 bewegt werden. Die Rollenelemente können wie in Fig. 3 direkt in den Führungsbahnen des oberen Doppelschenkels oder des unteren Doppelschenkels geführt werden.

Nach einer auch in Fig. 10 dargestellten Variante kann auch ein drittes Schienenelement 75 zwischen dem ersten Schienenelement 1 und dem zweiten Schienenelement 2 angeordnet sein. Auch in Fig. 9 ist ein Teil dieses dritten Schienenelements 75 sichtbar, wird aber zu einem grossen Teil durch das Verschiebeelement 95 des Schienenelements 1 verdeckt.

Das Gleitelement 53 ist mit dem Tragelement 54 lösbar oder unlösbar verbunden, sodass bei einer Verschiebung des Gleitelements 53 das Tragelement 54 zusammen mit dem Gleitelement 53 verschoben wird. Das Tragelement 54 ist in dem vorliegenden Ausführungsbeispiel als ein Profilelement mit rechteckigem Querschnitt ausgestaltet. Das erste Schienenelement 1 weist einen Antriebsriemen 3 auf, welcher ein erstes Riemenende 33 aufweist, welches mittels eines ersten Befestigungsmittels 41 an oder nahe einem ersten Ende 11 des ersten Schienenelements 1 befestigt ist. Der Antriebsriemen weist ein zweites Riemenende 34 auf, welches mittels eines zweiten Befestigungsmittels 42 an oder nahe einem zweiten Ende 12 des ersten Schienenelements 1 befestigt ist, sodass sich der Antriebsriemen 3 in Längsrichtung des ersten Schienenelements vom ersten Befestigungsmittel 41 bis zum zweiten Befestigungsmittel 42 erstreckt. Unter "nahe" soll hierbei eine Position verstanden werden, die sich in der Nähe des Endes 11, 12 befindet, also dem entsprechenden Ende des Schienenelements näher ist, als der Mittenebene, welche die Halbierende der Länge des Schienenelements ausbildet. Insbesondere ist unter nahe ein Abstand gemeint, der im Bereich vom entsprechenden Ende bis zu ungefähr 25% der Länge des Schienenelements gemessen von ebendiesem Ende liegt.

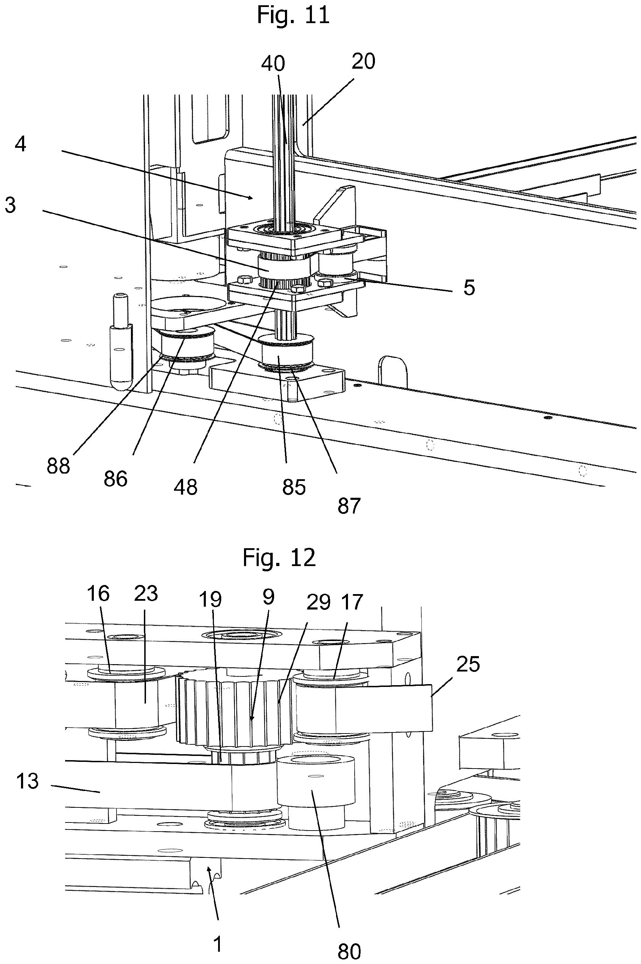

Der Antriebsriemen 3 wird über eine ortsfeste Antriebsvorrichtung 4 geführt. Die Antriebsvorrichtung 4 ist in Fig. 11 im Detail gezeigt. Das zweite Ende 12 ist in Fig. 9 hinter dem Verschiebeelement 95 angeordnet und daher nicht sichtbar, sodass Bezugszeichen 12 nur die ungefähre Position dieses zweiten Endes 12 zeigt. Gemäss dem vorliegenden Ausführungsbeispiel ist der Antriebsriemen 3 oberhalb des Tragelements 54 befestigt. Das Befestigungselement 41 zur Befestigung des Antriebsriemens 3 weist zwei gegenüberliegende Plattenelemente 43, 44 auf, zwischen denen das Ende des Antriebsriemens 3 eingeklemmt werden kann. Eines dieser Plattenelemente bildet eine Grundplatte 43 aus. Diese Grundplatte ist L-förmig und mittels Schrauben auf der Innenseite des unteren Schenkels befestigt. Das der Grundplatte gegenüberliegende Plattenelement bildet eine Deckplatte 44 aus. Die Grundplatte 43 und Deckplatte 44 können mit einer Schraubverbindung gesichert sein, sodass das erste Ende 33 des Antriebsriemens 3 zwischen Grundplatte und Deckplatte gehalten wird.

Eine erste Umlenkrolle 5 und eine zweite Umlenkrolle 6 sind vorgesehen, sodass der Antriebsriemen 3 von der Längsrichtung in eine Querrichtung umlenkbar ist. Der Antriebsriemen 3 erstreckt sich vom ersten Ende 11 bis zur ersten Umlenkrolle 5 in Längsrichtung des ersten Schienenelements 1 und vom zweiten Ende 12 zur zweiten Umlenkrolle 6 in Längsrichtung, wobei dieser Teil des Antriebsriemens in Fig. 9 durch das Rahmenelement 90 teilweise verdeckt ist. Der Antriebsriemen 3 erstreckt sich von der ersten Umlenkrolle 5 zur Antriebsvorrichtung 4 in Querrichtung und von der zweiten Umlenkrolle 6 zur Antriebsvorrichtung in Querrichtung. Das heisst, der Antriebsriemen 3 verläuft durch eine Öffnung des Rahmenelements 90 zu der in Fig. 9 hinter dem Rahmenelement 90 befindlichen Antriebsvorrichtung 4. Die Antriebsvorrichtung 4 besteht gemäss diesem Ausführungsbeispiel aus einer Antriebsspindel 40, die von einer in Fig. 11 dargestellten Antriebseinheit angetrieben werden kann.

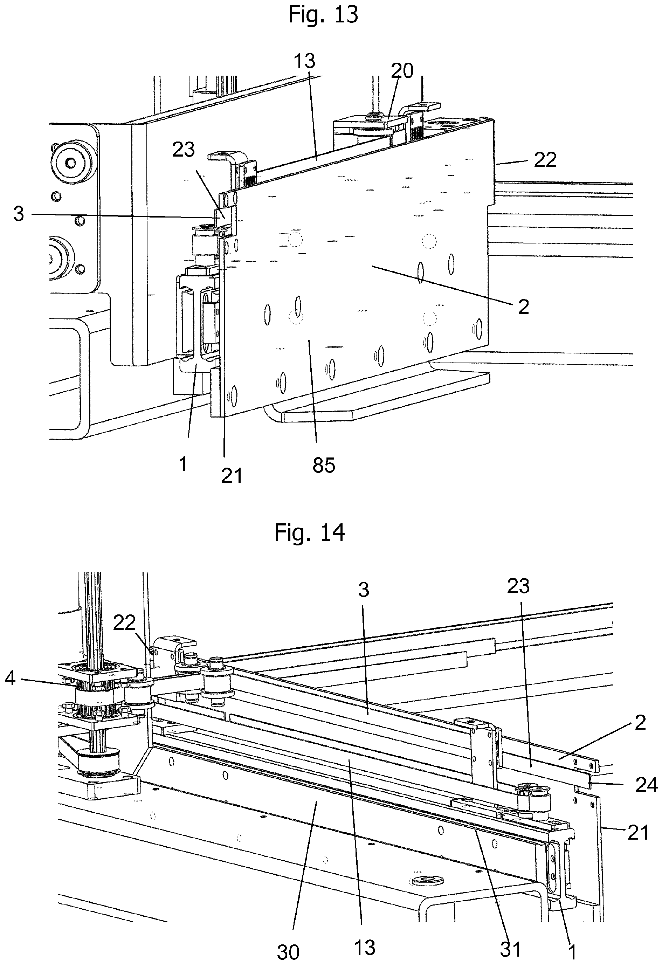

Ein erster Riemen 13 ist über eine hintere Umlenkrolle 8 in der Nähe des ersten Endes 11 des ersten Schienenelements 1 und über eine vordere Umlenkrolle 9 in der Nähe des zweiten Endes 12 des ersten Schienenelements 1 geführt. Die vordere Umlenkrolle 9 dient zum Antrieb eines zweiten Riemens 23, welcher mit dem zweiten Schienenelement 2 verbunden ist, was in Fig. 13 und Fig. 14 gezeigt ist. Der erste Riemen 13 weist ein erstes Riemenende 14 und ein zweites Riemenende 15 auf, wobei das erste Riemenende 14 und das zweite Riemenende 15 ortsfest an einem Befestigungselement 7 befestigt sind. Das Befestigungselement 7 kann beispielsweise mit dem Rahmenelement 90 verbunden sein. Die vordere Umlenkrolle 9 weist ein erstes Rollenelement 19 und ein zweites Rollenelement 29 auf, wobei das erste Rollenelement 19 zur Aufnahme des ersten Riemens 13 dient und das zweite Rollenelement 29 zur Aufnahme des zweiten Riemens 23 dient, sodass bei Verschiebung des ersten Schienenelements 1 durch Betätigung der Antriebsvorrichtung 4 die vordere Umlenkrolle 9 durch den ersten Riemen 13 mittels des ersten Rollenelements 19 in eine Rotationsbewegung versetzbar ist, sowie das zweite Schienenelement 2 durch den zweiten Riemen 23 über das zweite Rollenelement 29 der vorderen Umlenkrolle 9 in Bewegung versetzbar ist, was in Fig. 12 im Detail dargestellt ist.

Der zweite Riemen 23 weist ein erstes Riemenende 24 auf, welches an einem ersten Ende 21 des zweiten Schienenelements 2 befestigt ist und der zweite Riemen 23 weist ein zweites Riemenende 25 auf, welches an einem zweiten Ende 22 des zweiten Schienenelements 2 befestigt ist, was in Fig. 13 und Fig. 14 teilweise dargestellt ist.

Fig. 10 zeigt einen Schnitt durch die Schienenelemente 1, 2, 75. Das erste Schienenelement 1 ist als Doppel-T-Träger ausgebildet. Das erste Schienenelement weist ein Halselement sowie einen oberen Doppelschenkel 55 und einen unteren Doppelschenkel 65 auf. Gemäss des vorliegenden Ausführungsbeispiels weisen sowohl der obere Doppelschenkel 55 als auch der untere Doppelschenkel 65 auf deren Innenseite je ein Führungselement auf. Der obere Doppelschenkel 55 weist ein erstes oberes Führungselement 56 und ein zweites oberes Führungselement 57 auf. Der untere Doppelschenkel 65 weist ein erstes unteres Führungselement 66 und ein zweites unteres Führungselement 67 auf. Das erste obere Führungselement 56 und das erste untere Führungselement liegen auf derselben Seite des Gleitelements 53 und sind dem Befestigungselement 30 zugewendet. Das Befestigungselement 30 weist ein erstes Führungselement 31 und ein zweites Führungselement 32 auf. Das erste obere Führungselement 56 und das Führungselement 31 bilden die Auflage für einen Gleitkörper 35. Das erste untere Führungselement 66 und das Führungselement 32 bilden die Auflage für einen Gleitkörper 36. Das Gleitelement 53 kann daher entlang des Führungselements 31 sowie des Führungselements 32 gleiten, sodass das erste Schienenelement 1 relativ zum Befestigungselement 30 verschiebbar ist.

Das dritte Schienenelement 75 ist als ein C-Profilelement ausgebildet. Es weist ein Halselement 77 auf, das von einem ersten Schenkel 76 und einem zweiten Schenkel 78 begrenzt ist. Jeder der Schenkel 76, 78 weist eine Innenseite und eine Aussenseite auf. Sowohl auf der Innenseite, als auch auf der Aussenseite jeder der Schenkel 76, 78 befinden sich Führungselemente. Daher kann das dritte Schienenelement 75 sowohl in Bezug auf das erste Schienenelement 1 als auch in Bezug auf das zweite Schienenelement 2 verschoben werden. Zwischen den Führungselementen 68, 69 des dritten Schienenelements 75 und den zugehörigen Führungselementen 57, 67 des ersten Schienenelements 1 befinden sich die Gleitkörper 27, 37, sodass das dritte Schienenelement 75 relativ zum ersten Schienenelement 1 verschiebbar ist. Zwischen den Führungselementen 71, 72 des zweiten Schienenelements 2 und den Führungselementen 73, 74 des dritten Schienenelements befinden sich die Gleitkörper 38, 39. Das erste Führungselement 73 und das zweite Führungselement 74 befinden sich jeweils auf der Innenseite des zugehörigen Schenkels 76, 78. Das erste, obere Führungselement 73 und das erste Führungselement 71 an der Aussenseite des zweiten Schienenelements bilden die Auflage für einen oder mehrere Gleitkörper 38. Das zweite, untere Führungselement 74 und das zweite Führungselement 72 bilden die Auflage für einen Gleitkörper 39. Die mit dem zweiten Schienenelement 2 verbundenen Führungselemente 71, 72 können daher entlang des zweiten oberen Führungselements 73 sowie des zweiten unteren Führungselements 74 gleiten, sodass das zweite Schienenelement 2 relativ zum dritten Schienenelement 75 verschiebbar ist.

Die Antriebsvorrichtung 4 besteht gemäss Fig. 11 aus einer Antriebsspindel 40, die von einem nicht dargestellten Antriebsmotor über einen Antriebsriemen 85 angetrieben werden kann. Auf der Antriebsspindel 40 ist eine Antriebsrolle 48 angeordnet, um welche der Antriebsriemen 3 zumindest teilweise verläuft. Die Antriebsrolle 48 treibt den Antriebsriemen 3 derart an, dass entweder die Länge des Antriebsriemens zwischen dem ersten Ende des Antriebsriemens und der Antriebsrolle verringert und entsprechend die Länge des Antriebsriemens zwischen dem zweiten Ende des Antriebsriemens und der Antriebsrolle vergrössert wird oder umkehrt, je nach der gewählten Drehrichtung der Antriebsrolle. Wenn also die Antriebsrolle 48 in der vorliegenden Darstellung im Gegenuhrzeigersinn bewegt wird, verkürzt sich der Abstand zwischen der Umlenkrolle 5 und dem ersten Riemenende 33. Das erste Schienenelement 1 wird somit in der Darstellung gemäss Fig. 9 nach hinten, das heisst, in Richtung des Querrahmens 91, verschoben.

Fig. 12 zeigt ein Detail des Verschiebemechanismus der Schienenelemente des Ausführungsbeispiels nach Fig. 9. Die vordere Umlenkrolle 9 weist ein erstes Rollenelement 19 und ein zweites Rollenelement 29 auf, wobei das erste Rollenelement 19 zur Aufnahme des ersten Riemens 13 dient und das zweite Rollenelement 29 zur Aufnahme des zweiten Riemens 23 dient, sodass bei Verschiebung des ersten Schienenelements 1 durch Betätigung der Antriebsvorrichtung 4 die vordere Umlenkrolle 9 durch den ersten Riemen 13 mittels des ersten Rollenelements 19 in eine Rotationsbewegung versetzbar ist, sowie das zweite Schienenelement 2 durch den zweiten Riemen 23 über das zweite Rollenelement 29 der vorderen Umlenkrolle 9 in Bewegung versetzbar ist.

Das erste Rollenelement 19 und das zweite Rollenelement 29 sind derart mit der Umlenkrolle 9 verbunden, dass bei Bewegung des ersten Rollenelements 19 das zweite Rollenelement 29 mitdreht. Der Durchmesser des ersten Rollenelements 19 kann sich vom Durchmesser des zweiten Rollenelements 29 unterscheiden. Gemäss des vorliegenden Ausführungsbeispiels weist das erste Rollenelement 19 den halben Durchmesser des zweiten Rollenelements 29 auf, sodass das zweite Schienenelement 2 um die doppelte Weglänge in Bezug auf das erste Schienenelement verschoben wird. Wird das erste Schienenelement 1 somit um die Weglänge x in Längsrichtung verschoben, erfolgt durch die Betätigung der vorderen Umlenkrolle 9 gleichzeitig eine Verschiebung des zweiten Schienenelements 2 um die Weglänge 2*x, das heisst um die doppelte Weglänge.

Zwischen dem ersten Riemenende 24 und dem zweiten Rollenelement 29 kann wie in Fig. 12 gezeigt ist, eine Umlenkrolle 16 und zwischen dem zweiten Riemenende 25 und dem zweiten Rollenelement 29 eine Umlenkrolle 17 angeordnet sein, sodass der zweite Riemen 23 über die Umlenkrollen 16, 17 zum zweiten Rollenelement 29 führbar ist und am Rollenelement 29 zumindest über einen Teil des Umfangs desselben anliegt. Die Umlenkrollen 16, 17 sind ortsfest auf einem Befestigungselement gelagert, das mit dem ersten Schienenelement 1 verbunden ist. Die Umlenkrollen 16, 17 können um ihre Drehachsen drehbar sein. Gemäss dem in Fig. 9-14 dargestellten Ausführungsbeispiel werden diese zusätzlichen Umlenkrollen verwendet, um sicherzustellen, dass der Riemen 23 schlupffrei durch das Rollenelement 29 angetrieben wird. Durch diese Umlenkrollen 16, 17 wird somit die Führung des zweiten Riemens 23 verbessert, sodass die Kraftübertragung vom Rollenelement 29 auf den zweiten Riemen 23 verbessert werden kann, sodass auch bei hoher Belastung eine präzise, ruckfreie Führung des zweiten Schienenelements 2 gewährleistet ist. Das zweite Schienenelement ist in der Fig. 12 nicht sichtbar, da es die Anordnung der Umlenkrollen verdecken würde. Fig. 6 zeigt die gegenüberliegende Seite der Umlenkrollen nach dem ersten Ausführungsbeispiel. Das erste Ausführungsbeispiel gemäss Fig. 6 unterscheidet sich vom vorliegenden Ausführungsbeispiel gemäss Fig. 9-14 dahingehend, dass gemäss dem vorliegenden Ausführungsbeispiel der zweite Riemen 23 oberhalb des ersten Riemens 13 zu liegen kommt, während im ersten Ausführungsbeispiel der zweite Riemen 23 unterhalb des ersten Riemens 13 verläuft.

Der erste Riemen 13 läuft um das erste Rollenelement 19, wobei der Riemen 13 mindestens entlang eines Winkels von ungefähr 180 Grad auf dem Rollenelement 19 aufliegt. Der Riemen 13 kann unter Vorspannung stehen, sodass ein Drehmoment durch den Riemen 13 auf das erste Rollenelement 19 übertragen werden kann. Zusätzlich kann eine Umlenkrolle 80 vorgesehen sein, welche den ersten Riemen 13 zusätzlich gegen das Rollenelement 19 drückt, sodass bei fehlender oder nachlassender Vorspannung des ersten Riemens 13 immer noch gewährleistet ist, dass das Drehmoment auf das Rollenelement 29 übertragen wird, wodurch die Verschiebebewegung des zweiten Schienenelements vorgenommen werden kann.

Fig. 13 zeigt die Ansicht von Fig. 9 mit dem vollständigen zweiten Schienenelement 2. Dem zweiten Schienenelement kommt hierbei eine Schutzfunktion zu, indem es den Verschiebemechanismus vor umkippenden Lasten schützt, welche auf die dargestellte Innenwand des zweiten Schienenelements 2 auftreffen können. Das zweite Schienenelement 2 weist ein erstes Ende 21 und ein zweites Ende 22 auf. Der Antriebsriemen 3 ist am oder in der Nähe des ersten Endes 21 und des zweiten Endes 22 am zweiten Schienenelement befestigt. Ein hierfür verwendetes Befestigungselement ist in der vorliegenden Darstellung weggelassen.

Fig. 14 eine Ansicht der Antriebsseite des Ausführungsbeispiels gemäss Fig. 9. Das heisst, Fig. 14 zeigt eine Ansicht des Ausführungsbeispiels gemäss Fig. 9 oder Fig. 13 von hinten. In Fig. 14 sind der Antriebsriemen 3, der dahinter liegende zweite Riemen 23 sowie der darunter angeordnete erste Riemen 13 gezeigt. In Fig. 14 ist das erste Schienenelement 1 vor dem zweiten Schienenelement 2 gelegen. Daher ist in Fig. 14 die Halterung des ersten Schienenelements 1 in dem ortsfesten Befestigungselement 30 gezeigt. Das Befestigungselement 30 ist wiederum an dem Rahmenelement 90 befestigt, welches in der vorliegenden Darstellung weggelassen ist, um den Blick auf die Anordnung der Riemen 3,13, 23 freizugeben. Das erste Schienenelement 1 ist entlang der Führungsschienen 31, 32, wie in Fig. 10 gezeigt, verschiebbar. Die Führungsschiene 31 ist in Fig. 14 sichtbar, die Führungsschiene 32 ist durch das Befestigungselement 32 verdeckt. In Fig. 14 ist auch die in Fig. 11 genauer gezeigte Antriebsvorrichtung 4 gezeigt.

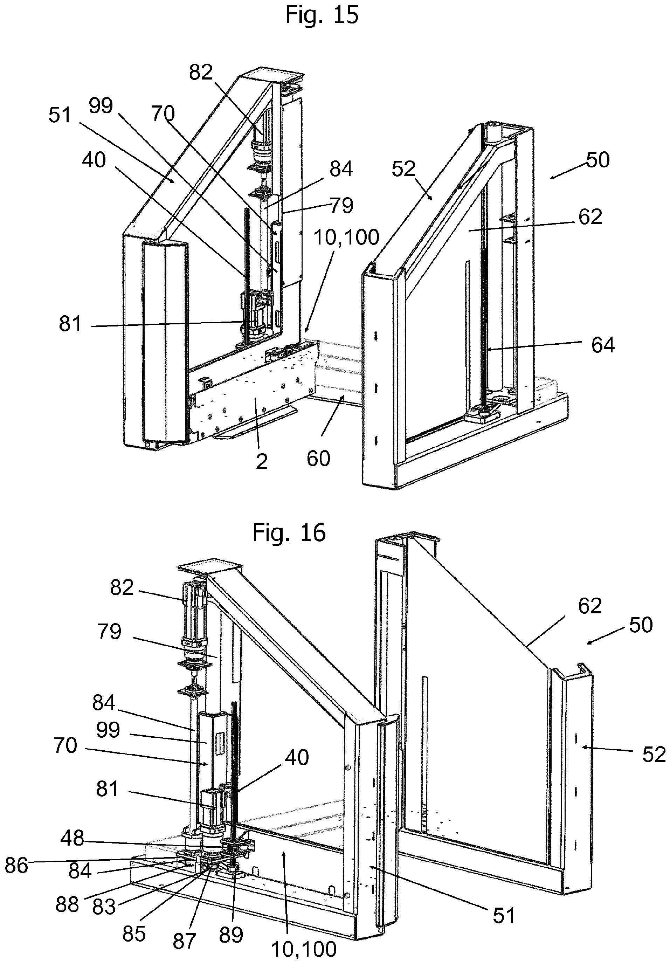

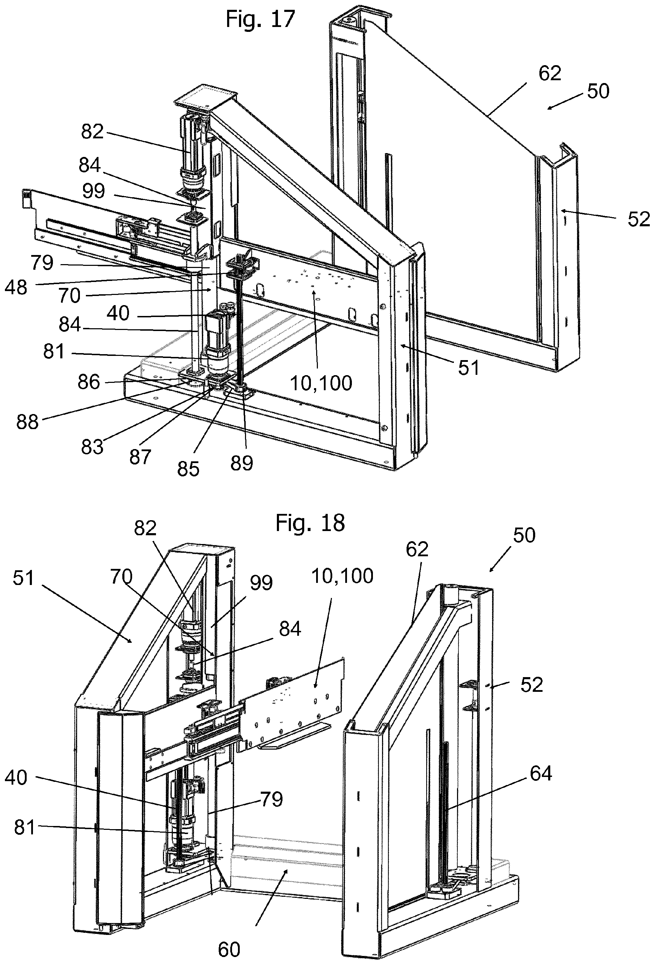

Fig. 15 zeigt eine erste Ansicht eines Ausführungsbeispiels einer Positioniervorrichtung 50 mit einer ausziehbaren Schiene 10, 100 nach einem der vorhergehenden Ausführungsbeispiele. Die Positioniervorrichtung weist einen ersten trapezförmigen Rahmen 51 und einen zweiten trapezförmigen Rahmen 52 auf. Jeder der beiden trapezförmigen Rahmen weist zwei sich in Vertikalrichtung erstreckende Schenkelelemente auf, sowie ein unteres und ein oberes Verbindungselement, welche eine Verbindung zwischen den oberen und unteren Enden der Schenkelelemente ausbilden. Das untere Verbindungselement schliesst mit jedem der Schenkelelemente einen rechten Winkel ein und liegt auf dem Untergrund auf. Der Untergrund kann ein Fundament oder ein Boden einer Produktionshalle sein. Das obere Verbindungselement ist in einem Winkel zur Ebene des Fundaments angeordnet, da die beiden Schenkelelemente unterschiedliche Länge aufweisen. Die Schenkelelemente können als Trägerelemente mit einem C, I, oder L-förmigen Profil ausgebildet sein. Die beiden trapezförmigen Rahmen 51, 52 sind zueinander parallel angeordnet. Zwischen dem ersten trapezförmigen Rahmen 51 und dem zweiten trapezförmigen Rahmen 52 erstreckt sich ein Querrahmen 60. Der Querrahmen ist vorzugsweise unmittelbar angrenzend oder in der Nähe des Untergrunds angeordnet und kann neben der Stabilisierung der trapezförmigen Rahmen auch der Aufnahme von Antriebsriemen oder anderen Antriebselementen für die ausziehbare Schiene 10, 100 dienen. Die ausziehbare Schiene ist derart im trapezförmigen Rahmen angeordnet, dass sie eine Vertikalbewegung ausführen kann. Insbesondere kann die ausziehbare Schiene von einer Warteposition in eine Verschiebeposition bewegt werden. In der Warteposition befindet sich die ausziehbare Schiene in unmittelbarer Nähe des Untergrunds und/oder liegt auf dem Untergrund auf. Die Verschiebeposition ist eine gegenüber der Warteposition erhöhte Position. Um von der Warteposition in die Verschiebeposition (siehe auch Fig. 17, 18) zu gelangen, ist eine Verschiebung der horizontalen Schiene entlang einer vertikalen Achse erforderlich, in einem kartesischen Koordinatensystem üblicherweise als z-Achse bezeichnet. Die vertikale Verschiebung kann mittels eines Vertikalantriebs 70 erfolgen. Ein derartiger Vertikalantrieb kann mindestens ein Element der Gruppe der Riemen, Spindeln, der hydraulisch oder pneumatisch angetriebenen Hubvorrichtungen umfassen. In der vorliegenden Darstellung sind allfällige Abdeckelemente für den trapezförmigen Rahmen 51 weggenommen, um den Blick auf die ausziehbare Schiene sowie eine Variante eines Vertikalantriebs 70 zu zeigen. Der trapezförmige Rahmen 52 ist mit einem inneren Abdeckelement 62 versehen, sodass die dahinter befindliche ausziehbare Schiene nicht sichtbar ist. Sie weist denselben Aufbau wie die ausziehbare Schiene 10, 100 auf, ist aber um eine Mittenebene, welche die Halbierende der beiden trapezförmigen Rahmen 51, 52 ausbildet, gespiegelt.

Fig. 16 zeigt eine zweite Ansicht eines Ausführungsbeispiels einer Positioniervorrichtung mit einer ausziehbaren Schiene, wobei sich die ausziehbare Schiene wie in Fig. 15 in der Warteposition befindet. Allerdings ist die Blickrichtung in Fig. 16 derart gewählt, dass der Betrachter von einer seitlichen, äusseren Position auf die Positioniervorrichtung 50 schaut. In der vorliegenden Darstellung sind allfällige Abdeckelemente bis auf das Abdeckelement 62 entfernt worden, um den Blick auf den Vertikalantrieb 70 freizugeben. Der Vertikalantrieb 70 umfasst eine Stange 79 sowie einen entlang der Stange vertikal verschiebbaren Zylinder 99, welcher hydraulisch oder pneumatisch antreibbar ist.

Der Verschiebemechanismus für jede der ausziehbaren Schienen 10, 100 wird durch einen ersten Elektromotor 81 sowie einen zweiten Elektromotor 82 in Gang gesetzt. Jeder dieser beiden Elektromotoren 81, 82 kann eine Antriebswelle 83, 84, welche eine Antriebsrolle 87, 88 für einen Antriebsriemen 85, 86 aufweist. Gemäss dem vorliegenden Ausführungsbeispiel ist der Elektromotor 81 an eine Antriebswelle 83 gekoppelt, auf welcher die Antriebsrolle 87 angebracht ist. Die Antriebsrolle 87 treibt den Antriebsriemen 85, welcher zu der Antriebsspindel 64 für die ausziehbare Schiene führt, die am trapezförmigen Rahmen 52 angeordnet ist (siehe Fig. 15). Diese ausziehbare Schiene ist in Fig. 16 weggelassen, um die zeichnerische Darstellung nicht mit zu vielen Details zu überladen.

Der Elektromotor 82 weist eine Antriebswelle 84 auf, auf welcher die Antriebsrolle 88 angebracht ist. Die Antriebsrolle 88 treibt den Antriebsriemen 86, welcher zu dem Teil des Verschiebemechanismus führt, mittels welchem die ausziehbare Schiene, die am trapezförmigen Rahmen 51 angeordnet ist, von der Verschiebeposition in die Warteposition und umgekehrt bewegt werden kann. Der Antriebsriemen 86 treibt die Antriebsrolle 89, welche auf der Antriebsspindel 40 angeordnet ist. Die Antriebsrolle 89 ist drehfest mit der Antriebsspindel 40 verbunden, sodass die Antriebsspindel von der Antriebsrolle 89 antreibbar ist.

Die Anordnung des Elektromotors 82 über dem Elektromotor 81 ist aus Gründen der Platzersparnis gewählt worden. Gemäss einem nicht dargestellten Ausführungsbeispiel könnte sich der Elektromotor 82 auch neben dem Elektromotor 81 befinden. Gemäss einer nicht dargestellten Variante könnte auch ein einziger Elektromotor vorgesehen werden, da jede der beiden ausziehbaren Schienen gleichzeitig von der Verschiebeposition in die Warteposition und umgekehrt bewegt wird. Ein erster und ein zweiter Elektromotor können auch aus Gründen der Redundanz vorgesehen werden. Gemäss einer derartigen Variante wird ein einziger Antriebsriemen vorgesehen, der über jede der Antriebsrollen geführt wird. Wenn einer der Elektromotoren ausfällt, kann der Antriebsriemen noch vom zweiten Elektromotor bewegt werden, sodass der Verschiebemechanismus für die ausziehbare Schiene trotz eines Ausfalls eines Elektromotors weiterhin betrieben werden kann, bis der defekte Elektromotor oder Teile davon ausgetauscht sind. Es kann nach einem Ausführungsbeispiel auch vorteilhaft sein, zwei Elektromotoren in kleinerer Bauweise vorzusehen anstatt eines Elektromotors grosser Bauweise, für den mehr Platz benötigt wird.

Der Antriebsriemen 86 verläuft um die Antriebsrolle 88, wird durch oder entlang des Querrahmens 60 geleitet und verläuft entlang des unteren Verbindungselements bis zur Antriebsrolle für die Antriebsspindel 64.

Fig. 17 zeigt eine dritte Ansicht eines Ausführungsbeispiels einer Positioniervorrichtung mit einer ausziehbaren Schiene im ausgezogenen Zustand. Die Blickrichtung in Fig. 17 ist ähnlich der Fig. 16 gewählt, sodass der Betrachter von einer seitlichen, äusseren Position auf die Positioniervorrichtung 50 schaut. In der vorliegenden Darstellung sind allfällige Abdeckelemente bis auf das Abdeckelement 62 entfernt worden, um den Blick auf den Vertikalantrieb 70 zu zeigen. Der Vertikalantrieb 70 umfasst eine Stange 79 sowie einen entlang der Stange vertikal verschiebbaren Zylinder 99, welcher hydraulisch oder pneumatisch antreibbar ist.

Der Verschiebemechanismus für jede der ausziehbaren Schienen 10, 100 wird durch einen ersten Elektromotor 81 sowie einen zweiten Elektromotor 82 in Gang gesetzt. Jeder dieser beiden Elektromotoren 81, 82 kann eine Antriebswelle 83, 84, welche eine Antriebsrolle 87, 88 für einen Antriebsriemen 85, 86 aufweist. Gemäss dem vorliegenden Ausführungsbeispiel ist der Elektromotor 81 an eine Antriebswelle 83 gekoppelt, auf welcher die Antriebsrolle 87 angebracht ist. Die Antriebsrolle 87 treibt den Antriebsriemen 85, welcher zu der Antriebsspindel 64 für die ausziehbare Schiene führt, die am trapezförmigen Rahmen 52 angeordnet ist (siehe Fig. 18). Diese ausziehbare Schiene ist in Fig. 17 weggelassen, um die zeichnerische Darstellung nicht mit zu vielen Details zu überladen.

Der Elektromotor 82 weist eine Antriebswelle 84 auf, auf welcher die Antriebsrolle 88 angebracht ist. Die Antriebsrolle 88 treibt den Antriebsriemen 86, welcher zu dem Teil des Verschiebemechanismus führt, mittels welchem die ausziehbare Schiene, die am trapezförmigen Rahmen 51 angeordnet ist, von der Verschiebeposition in die Warteposition und umgekehrt bewegt werden kann. Der Antriebsriemen 86 treibt die Antriebsrolle 89, welche auf der Antriebsspindel 40 angeordnet ist. Die Antriebsrolle 89 ist drehfest mit der Antriebsspindel 40 verbunden, sodass die Antriebsspindel von der Antriebsrolle 89 antreibbar ist. Die Vorteile und Gründe für diese Anordnung gelten entsprechend denen, die in Zusammenhang mit Fig. 16 Erwähnung gefunden haben.

Fig. 18 zeigt eine vierte Ansicht eines Ausführungsbeispiels einer Positioniervorrichtung mit einer ausziehbaren Schiene im ausgezogenen Zustand. Die Positioniervorrichtung weist einen ersten trapezförmigen Rahmen 51 und einen zweiten trapezförmigen Rahmen 52 auf, der wie in einer der Fig. 15-17 ausgebildet ist. Die ausziehbare Schiene wurde im trapezförmigen Rahmen durch eine Vertikalbewegung mittels des Vertikalantriebs 70 und mittels der Antriebsvorrichtung 4 in eine Verschiebeposition bewegt. Die Verschiebeposition ist eine gegenüber der Warteposition erhöhte Position. Um von der Warteposition in die Verschiebeposition zu gelangen, ist eine Verschiebung der horizontalen Schiene entlang einer vertikalen Achse erforderlich, in einem kartesischen Koordinatensystem üblicherweise als z-Achse bezeichnet. Die vertikale Verschiebung kann mittels des Vertikalantriebs 70 erfolgen. In der vorliegenden Darstellung sind allfällige Abdeckelemente für den trapezförmigen Rahmen 51 weggenommen, um den Blick auf die ausziehbare Schiene sowie die Antriebsvorrichtung 4 zu ermöglichen. Die ausziehbare Schiene, welche zum trapezförmigen Rahmen 52 gehörig ist, hat denselben Aufbau wie die ausziehbare Schiene 10, 100, ist aber um eine Mittenebene, welche die Halbierende der beiden trapezförmigen Rahmen 51, 52 ausbildet, gespiegelt.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Ausziehbare Schiene (10), umfassend ein erstes Schienenelement (1) sowie ein zweites Schienenelement (2), wobei das erste Schienenelement (1) relativ zum zweiten Schienenelement (2) verschiebbar ist, wobei das erste Schienenelement (1) einen Antriebsriemen (3) aufweist, **dadurch gekennzeichnet, dass** an einem ersten Ende (11) des ersten Schienenelements (1) und an einem zweiten Ende (12) des ersten Schienenelements (1) befestigt ist, sodass sich der Antriebsriemen (3) in Längsrichtung des ersten Schienenelements (1) vom ersten Ende (11) bis zum zweiten Ende (12) erstreckt, wobei der Antriebsriemen (3) über eine ortsfeste Antriebsvorrichtung (4) geführt wird, wobei eine erste Umlenkrolle (5) und eine zweite Umlenkrolle (6) vorgesehen sind, sodass der Antriebsriemen (3) von der Längsrichtung in eine Querrichtung umlenkbar ist, wobei sich der Antriebsriemen (3) vom ersten Ende (11) bis zur ersten Umlenkrolle (5) in Längsrichtung des ersten Schienenelements (1) erstreckt, wobei sich der Antriebsriemen (3) vom zweiten Ende (12) zur zweiten Umlenkrolle (6) in Längsrichtung des ersten Schienenelements (1) erstreckt, wobei sich der Antriebsriemen (3) von der ersten Umlenkrolle (5) zur Antriebsvorrichtung (4) in der Querrichtung erstreckt, wobei sich der Antriebsriemen (3) von der zweiten Umlenkrolle (6) zur Antriebsvorrichtung in der Querrichtung erstreckt, wobei einer hintere Umlenkrolle (8) in der Nähe eines ersten Endes (11) des ersten Schienenelements (1) und eine vordere Umlenkrolle (9) in der Nähe eines zweiten Endes (12) des ersten Schienenelements (1) am ersten Schienenelement (1) befestigt sind, wobei ein erster Riemen (13) über die hintere Umlenkrolle (8) und über die vordere Umlenkrolle (9) geführt ist, wobei die vordere Umlenkrolle (9) durch die Verschiebung des ersten Schienenelements durch den ersten Riemen (13) in eine Drehbewegung versetzbar ist, wobei die vordere Umlenkrolle (9) zum Antrieb eines zweiten Riemens (23) dient, welcher mit dem zweiten Schienenelement (2) verbunden ist.

2. Ausziehbare Schiene nach Anspruch 1, wobei der erste Riemen (13) ein erstes Riemenende (14) und ein zweites Riemenende (15) aufweist, wobei das erste Riemenende (14) und das zweite Riemenende (15) ortsfest an einem Befestigungselement (7) befestigt sind.

3. Ausziehbare Schiene nach einem der Ansprüche 1 oder 2, wobei die vordere Umlenkrolle (9) ein erstes Rollenelement (19) und ein zweites Rollenelement (29) aufweist, wobei das erste Rollenelement (19) zur Aufnahme des ersten Riemens (13) dient und das zweite Rollenelement (29) zur Aufnahme des zweiten Riemens (23) dient, sodass bei Verschiebung des ersten Schienenelements (1) durch Betätigung der Antriebsvorrichtung (4) die vordere Umlenkrolle (9) durch den ersten Riemen (13) mittels des ersten Rollenelements (19) in eine Rotationsbewegung versetzbar ist, sowie das zweite Schienenelement (2) durch den zweiten Riemen (23), der mittels des zweiten Rollenelements (29) der vorderen Umlenkrolle (9) in Bewegung versetzbar ist.

4. Ausziehbare Schiene nach einem der vorhergehenden Ansprüche, wobei der Antriebsriemen (3) ein erstes Riemenende (33) aufweist, welches mittels eines ersten Befestigungsmittels (41) an oder nahe des ersten Endes (11) des ersten Schienenelements (1) befestigt ist, wobei der Antriebsriemen (3) ein zweites Riemenende (34) aufweist, welches an oder nahe des zweiten Endes (12) des ersten Schienenelements (1) befestigt ist.

5. Ausziehbare Schiene nach einem der vorhergehenden Ansprüche 3 oder 4, wobei das erste Rollenelement (19) und das zweite Rollenelement (29) derart mit der Umlenkrolle (9) verbunden sind, dass bei Bewegung des ersten Rollenelements (19) das zweite Rollenelement (29) mitbewegbar ist.

6. Ausziehbare Schiene nach einem der vorhergehenden Ansprüche 3 bis 5, wobei der Durchmesser des ersten Rollenelements (19) sich vom Durchmesser des zweiten Rollenelements (29) unterscheidet.

7. Ausziehbare Schiene nach einem der vorhergehenden Ansprüche, wobei der zweite Riemen (23) ein erstes Riemenende (24) aufweist, welches an einem ersten Ende (21) des zweiten Schienenelements (2) befestigt ist und der zweite Riemen (23) ein zweites Riemenende (25) aufweist, welches an einem zweiten Ende (22) des zweiten Schienenelements (2) befestigt ist, wobei zwischen dem ersten Riemenende (24) und dem zweiten Rollenelement (29) eine Umlenkrolle (16) und zwischen dem zweiten Riemenende (25) und dem zweiten Rollenelement (29) eine Umlenkrolle (17) angeordnet ist, sodass der zweite Riemen (23) über die Umlenkrollen (16, 17) zum zweiten Rollenelement (29) führbar ist.

8. Ausziehbare Schiene nach Anspruch 7, wobei die Umlenkrollen (16, 17) ortsfest auf dem ersten Schienenelement (1) gelagert und um ihre Drehachsen drehbar sind.

9. Ausziehbare Schiene nach einem der vorhergehenden Ansprüche, wobei eine Führungsrolle (18, 80) für den ersten Riemen (13) vorgesehen ist.

10. Ausziehbare Schiene nach einem der vorhergehenden Ansprüche, wobei die erste Umlenkrolle (5) und die zweite Umlenkrolle (6) ortsfest angeordnet sind.

11. Ausziehbare Schiene nach einem der vorhergehenden Ansprüche, wobei ein ortsfestes Halteelement (20) vorgesehen ist, welches die erste Umlenkrolle (5) und die zweite Umlenkrolle (6) trägt.

12. Positioniervorrichtung (50) für eine Last umfassend eine ausziehbare Schiene (10, 100) nach einem der vorhergehenden Ansprüche.

13. Positioniervorrichtung (50) nach Anspruch 12, wobei die ausziehbare Schiene mittels eines Vertikalantriebs (70) zwischen einer Warteposition und einer Verschiebeposition verschiebbar ist.

14. Verfahren zur Positionierung einer Last in einer Verarbeitungsvorrichtung, umfassend eine ausziehbare Schiene (10, 100) nach einem der vorhergehenden Ansprüche, wobei in einem ersten Schritt die Last auf dem zweiten Schienenelement (2) positioniert wird, in einem zweiten Schritt die Last angehoben wird, in einem dritten Schritt die ausziehbare Schiene (10, 100) derart betätigt wird, dass das erste und/oder das zweite Schienenelement (1,2) die Last von der Ladeposition in eine Zielposition bewegen, in einem vierten Schritt die Last an der Zielposition positioniert wird, in einem fünften Schritt die ausziehbare Schiene (10, 100) abgesenkt wird, sowie in einem sechsten Schritt sich das erste und/oder zweite Schienenelement (1, 2, 75) von der Zielposition in die Ladeposition zurück bewegen.

15. Verfahren nach Anspruch 14, wobei nach Abschluss eines Verarbeitungsschritts die Last wieder aus der Verarbeitungsvorrichtung entnommen wird, wobei zur Entnahme der Last die nachfolgenden Verfahrensschritte ausgeführt werden: die ausziehbare Schiene (10, 100) wird derart betätigt, dass das erste und/oder das zweite Schienenelement von der Ladeposition in die Zielposition bewegt wird, sodann das zweite Schienenelement die Last an der Zielposition aufnimmt, anschliessend die ausziehbare Schiene (10, 100) mit der Last angehoben wird, danach sich das erste und/oder zweite Schienenelement in die Ladeposition zurückbewegen wobei anschliessend die ausziehbare Schiene in der Ladeposition samt der Last abgesenkt werden kann, sodass die Last abgestellt und entnommen werden kann.

## Claims

1. Expandable rail (10), comprising a first rail element (1) and a second rail element (2), whereby the first rail element (1) is slidable relatively to the second rail element (2), whereby the first rail element (1) comprises a drive belt (3), **characterized in that** it is attached to a first end (11) of the first rail element (1) and to a second end (12) of the first rail element (1), such that the drive belt (3) extends in longitudinal direction of the first rail element (1) from the first end (11) to the second end (12), whereby the drive belt (3) is guided over a stationary drive (4), whereby a first deflection pulley (5) and a second deflection pulley (6) are provided, such that the drive belt (3) is deflectable from the longitudinal direction into a transverse direction, whereby the drive belt (3) extends from the first end (11) to the first deflection pulley (5) in the longitudinal direction of the first rail element (1), whereby the drive belt (3) extends from the second end (12) to the second deflection pulley (6) in the longitudinal direction of the first rail element (1), whereby the drive belt (3) extends from the first deflection pulley (5) to the drive (4) in the transverse direction, whereby the drive belt (3) extends from the second deflection pulley (6) to the drive in the transverse direction, whereby a rear deflection pulley (8) is attached close to a first end (11) of the first rail element (1) and a front deflection pulley (9) is attached close to a second end (12) of the first rail element (1), whereby a first belt (13) is guided over the rear deflection pulley (8) and over the front deflection pulley (9) whereby the front deflection pulley (9) is rotatable by a translatory movement of the first rail element by means of the first belt (13), whereby the front deflection pulley (9) is used for driving a second belt (23), which is connected to the second rail element (2).

2. The expandable rail according to claim 1, whereby the first belt (13) comprises a first belt end (14) and a second belt end (15), whereby the first belt end (14) and the second belt end (15) are fixedly attached to an attachment element (7).

3. The expandable rail according to one of claims 1 or 2, whereby the front deflection pulley (9) comprises a first roller element (19) and a second roller element (29), whereby the first roller element (19) is configured to receive the first belt (13) and the second roller element (29) is configured to receive the second belt (23), such that upon a displacement of the first rail element (1) by the actuation of the drive (4) the front deflection pulley (9) is rotatable by the first belt (13) by means of the first roller element (19) and the second rail element (2) is rotatable by the second belt (23) by means of the second roller element (29) of the front deflection pulley (9).

4. The expandable rail according to one of the preceding claims, whereby the drive belt (3) comprises a first belt end (33), which is fastened by a first fastening means (41) at or close to the first end (11) of the first rail element (1), whereby the drive belt (3) comprises a second belt end (34), which is fastened at or close to the second end (12) of the first rail element (1).

5. The expandable rail according to one of claims 3 or 4, whereby the first roller element (19) and the second roller element (29) are connected to the deflection pulley (9) that upon the movement of the first roller element (19), the second roller element (29) is also movable.

6. The expandable rail according to one of claims 3 to 5, whereby the diameter of the first roller element (19) differs from the diameter of the second roller element (29).

7. The expandable rail according to one of the preceding claims, whereby the second belt (23) comprises a first belt end (24), which is attached to a first end (21) of the second rail element (2) and the second belt (23) comprises a second belt end (25), which is attached to a second end (22) of the second rail element (2), whereby a deflection pulley (16) is arranged between the first belt end (24) and the second roller element (29) and a deflection pulley (17) is arranged between the second belt end (25) and the second roller element (29), such that the second belt (23) is guidable over the deflection pulleys (16, 17) of the second roller element (29).

8. The expandable rail according to claim 7, whereby the deflection pulleys (16, 17) are fixedly supported on the first rail element (1) and are rotatable about their respective axes of rotation.

9. The expandable rail according to one of the preceding claims, whereby a guide pulley (18, 80) is provided for the first belt (13).

10. The expandable rail according to one of the preceding claims, whereby the first deflection pulley (5) and the second deflection pulley (6) are arranged at a fixed location.

11. The expandable rail according to one of the preceding claims, whereby a fixed holding element (20) is provided to carry the first deflection pulley (5) and the second deflection pulley (6).

12. A positioniong device (50) for a load comprising an expandable rail (10, 100) according to one of the preceding claims.

13. The positioniong device (50) according to claim 12, whereby the expandable rail is displaceable by a vertical drive (70) between a waiting position and a displacement position.

14. A method for positioning of a load in a processing device comprising an expandable rail (10, 100) according to one of the preceding claims, wherein in a first step, the load is positioned on the second rail element (2) in a second step, the load is lifted, in a third step, the expandable rail (10, 100) is actuated in such a way, that the first and/or the second rail element (1,2) move the load from the load position to a target position, in a fourth step the load is positioned at the target position, in a fifth step, the expandable rail (10, 100) is lowered and in a sixth step, the first and/or second rail element (1, 2, 75) return from the target position to the load position.

15. The method according to claim 14, wherein after completion of a processing step, the load is discharged from the processing device, whereby the following method steps are performed for the discharge of the load: the expandable rail (10, 100) is actuated in such a way, that the first and/or the second rail element (1,2) is moved from the load position to the target position, then, the second rail element receives the load in the target position, then, the expandable rail (10, 100) is lifted with the load, then, the first and/or the second rail element return to the load position, wherein the expandable rail is lowered subsequently in the load position together with the load, such that the load is deposited and can be discharged.

## Revendications

1. Guide télescopique (10), comprenant un premier élément de guidage (1) et un deuxième élément de guidage (2), en ce que le premier élément de guidage (1) est mobile relative au deuxième élément de guidage (2), en ce que le premier élément de guidage (1) comprend une courroie d'entraînement (3), **caractérisé en ce qu'**elle est attachée à une première fin (11) du premier élément de guidage (1) et à une deuxième fin (12) du premier élément de guidage (1), **en ce que** la courroie d'entraînement (3) s'étend dans une direction longitudinale du premier élément de guidage (1) de sa première fin (11) à sa deuxièmes fin (12), **en ce que** la courroie d'entraînement (3) est guidé sur un dispositif d'entraînement (4) stationnaire, **en ce que** une première poulie (5) et une deuxième poulie (6) sont prévues pour que la courroie d'entraînement (3) soit réorientée de la direction longitudinale à une direction latérale, **en ce que** la courroie d'entraînement (3) s'étend de la première fin (11) à la première poulie (5) dans la direction longitudinale du premier élément de guidage (1), **en ce que** la courroie d'entraînement (3) s'étend de la deuxième fin (12) à la deuxième poulie (6) dans la direction latérale, **en ce que** la courroie d'entraînement (3) s'étend de la deuxième poulie (6) au dispositif d'entraînement (4) dans la direction latérale, **en ce que** une poulie (8) arrière est montée près de la première fin (11) du premier élément de guidage (1) et une poulie (9) avant est montée près de la deuxième fin (12) du premier élément de guidage (1) au premier élément de guidage (1), **en ce qu'**une première ceinture (13) et guidée sur la poulie (8) arrière et sur la poulie (9) avant, **en ce que** la poulie (9) avant est mise on rotation par le déplacement du premier élément de guidage (1) par la première ceinture (13) **en ce que** la poulie (9) avant sert de l'entraînement d'une deuxième ceinture (23) qui est connecté au deuxième élément de guidage (2).

2. Le guide télescopique (10) selon la revendication 1, en ce que la première ceinture (13) comprend une première fin de ceinture (14) et une deuxième fin de ceinture (15), en ce que la première fin de ceinture (14) et la deuxième fin de ceinture (15) sont attachées stationnaires à un élément de fixation (7).

3. Le guide télescopique (10) selon une des revendications 1 ou 2, en ce que la poulie (9) avant comprend un premier élément de roulement (19) et un deuxième élément de roulement (29), en ce que le premier élément de roulement (19) sert de la réception de la première ceinture (13) et le deuxième élément de roulement (29) sert de la réception de la deuxième ceinture (23), pour que la poulie (9) avant est mise on rotation par le déplacement du premier élément de guidage (1) par l'opération du dispositif d'entraînement (4) par la première ceinture (13) avec le premier élément de roulement (19) et le deuxième élément de guidage (2) par la deuxième ceinture (23), qui est mise en rotation par le deuxième élément de roulement (29) de la poulie (9) avant.

4. Le guide télescopique (10) selon une des revendications précédentes, en ce que la courroie d'entraînement (3) comprend une première fin de courroie (33), qui est attaché par un premier moyen de fixation (41) à ou près de la première fin (11) du premier élément de guidage (1), en ce que la courroie d'entraînement (3) comprend une deuxième fin de courroie (33), qui est attaché a ou près de la deuxième fin (12) du premier élément de guidage (1).

5. Le guide télescopique (10) selon une des revendications 3 ou 4, en ce que le premier élément de roulement (19) et le deuxième élément de roulement (29) sont connectés d'une telle manière à la poulie (9) avant, pour que le deuxième élément de roulement (29) soit mobile à la suite d'un mouvement du premier élément de roulement (19).

6. Le guide télescopique (10) selon une des revendications 3 à 5, en ce que le diamètre du premier élément de roulement (19) est différent du diamètre du deuxième élément de roulement (29).

7. Le guide télescopique (10) selon une des revendications précédentes, en ce que la deuxième ceinture (23) comprend une première fin de ceinture (24), qui est attachée à une première fin (21) du deuxième élément de guidage (2) et la deuxième ceinture (23) comprend une deuxième fin de ceinture (25), qui est attachée à une deuxième fin (21) du deuxième élément de guidage (2), en ce qu'une poulie (16) est placée entre la première fin de ceinture (24) et le deuxième élément de roulement (29) et une poulie (17) est placée entre la deuxième fin de ceinture (25) et le deuxième élément de roulement (29), en ce que la deuxième ceinture (23) est guidée sur les poulies (16, 17) au deuxième élément de roulement (29).

8. Le guide télescopique (10) selon la revendication 7, en ce que les poulies (16, 17) sont arrangées stationnaires sur le premier élément de guidage (1) et peuvent tourner autour de leurs axes de rotation.

9. Le guide télescopique (10) selon une des revendications précédentes, en ce qu'une poulie de guidage (18, 80) est prévue pour la première ceinture (13).

10. Le guide télescopique (10) selon une des revendications précédentes, en ce la première poulie (5) et la deuxième poulie (6) sont stationnaires.

11. Le guide télescopique (10) selon une des revendications précédentes, en ce qu'un élément de retenue stationnaire (20) est prévu, qui porte la première poulie (5) et la deuxième poulie (6).

12. Dispositif de positionnement (50) pour une charge comprenant un guide télescopique (10, 100) selon une des revendications précédentes.

13. Dispositif de positionnement (50) selon la revendication 12, en ce que le guide télescopique est mise en déplacement par un dispositif d'entraînement vertical (70) entre une position d'attente et une position de déplacement.

14. Méthode pour le positionnement d'une charge dans un dispositif de traitement comprenant un guide télescopique (10, 100) selon une des revendications précédentes, en ce que dans une première étape, la charge est positionnée sur le deuxième élément de guidage (2), dans une deuxième étape la charge est levée, dans une troisième étape, le guide télescopique (10, 100) est mis en opération d'une manière que le premier et/ou le deuxième élément de guidage (1,2) déplacent la charge d'une position de charge à une position de destination, dans une quatrième étape, la charge est positionnée à sa position de destination, dans une cinquième étape, le guide télescopique (10, 100) (10, 100) est abaissé et dans une sixième étape le premier et/ou le deuxième élément de guidage (1, 2, 75) rentrent de la position de destination à la position de charge.

15. La méthode selon la revendication 14, en ce que la charge est enlevée du dispositif de traitement après la terminaison d'une étape de traitement, en ce que les étapes suivantes sont exécutées pour l'enlèvement de la charge: le guide télescopique (10, 100) est mis en opération d'une manière que le premier et/ou le deuxième élément de guidage est déplacé d'une position de charge à une position de destination, ensuite, le deuxième élément de guidage prend la charge à la position de destination, ensuite, le guide télescopique (10, 100) est levé avec la charge, ensuite, le premier et/ou le deuxième élément de guidage (1,2) rentrent à la position de charge, en ce que le guide télescopique peut être abaissé par la suite dans la position de charge avec la charge pour que la charge peut être positionnée et enlevée.
